(19) Europäisches Patentamt
European Patent Office
Office européen des brevets

(11) **EP 2 911 138 A2**

(12) **EUROPEAN PATENT APPLICATION**

(43) Date of publication:
**26.08.2015 Bulletin 2015/35**

(51) Int Cl.:
*G09C 1/00* (2006.01)    *H04L 9/06* (2006.01)

(21) Application number: **14195773.8**

(22) Date of filing: **02.12.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Roh, Dongyoung**<br>  **305-390 Daejeon (KR)**<br>• **Kim, Minkyu**<br>  **305-390 Daejeon (KR)**<br>• **Kim, Woo-Hwan**<br>  **305-390 Daejeon (KR)**<br>• **Kwon, Daesung**<br>  **305-390 Daejeon (KR)** |
| (30) Priority: **21.02.2014 KR 20140020527** | |
| (71) Applicant: **Electronics and Telecommunications Research Institute**<br>**Daejeon-city 305-350 (KR)** | (74) Representative: **Sieckmann, Dirk Christoph**<br>**Betten & Resch**<br>**Patent- und Rechtsanwälte PartGmbB**<br>**Theatinerstraße 8**<br>**(Fünf Höfe)**<br>**80333 München (DE)** |
| (72) Inventors:<br>• **Koo, Bonwook**<br>  **305-390 Daejeon (KR)** | |

(54) **Variable-length block cipher apparatus and method capable of format preserving encryption**

(57)    A variable-length block cipher apparatus and method capable of format preserving encryption are disclosed. An encryption device for a variable-length block cipher apparatus includes an encryption key generation unit configured to generate encryption round keys $eRK_o$, $eRK_1$,..., $eRK_{Nr}$ using a secret key and the number of rounds $Nr$, and a ciphertext output unit configured to output ciphertext having a length identical to that of plaintext using the plaintext and the encryption round keys. 7. A decryption device for a variable-length block cipher apparatus includes a decryption key generation unit configured to generate decryption round keys $dRK_0$, $dRK_1$,..., $dRK_{Nr}$ using a secret key and a number of rounds $Nr$, and a plaintext restoration unit configured to restore ciphertext into plaintext having a length identical to that of the ciphertext using the ciphertext and the decryption round keys.

FIG. 1

**Description**

BACKGROUND OF THE INVENTION

1. Technical Field

The present disclosure relates generally to a variable-length block cipher apparatus and method capable of format preserving encryption, and, more particularly, to a variable-length block cipher apparatus and method that are capable of, when encrypting plaintext having an arbitrary bit length, generating ciphertext having the same bit length.

2. Description of the Related Art

The encryption of messages is essential to the confidentiality of the messages. For this purpose, various block cipher techniques including the Advanced Encryption Standard (AES) are widely used. However, in conventional block cipher techniques, the sizes of blocks are fixed in advance. Accordingly, when data in a specific format, such as a social security number or a credit card number, is encrypted, the format of the data is changed. That is, in a database in which social security numbers or credit card numbers are stored, data can be easily managed when ciphertext into which data is encrypted also has the same format as social security numbers or credit card number. However, the conventional block cipher techniques do not support this functionality.

In general, an encryption scheme for enabling the format of plaintext and the format of ciphertext to be the same is referred to as format preserving encryption. In this case, the format of plaintext or the format of ciphertext may be viewed as a domain to which the plaintext belongs or a domain to which the ciphertext belongs. As described above, as techniques for converting plaintext belonging to an arbitrary domain into ciphertext belonging to the same domain, there are several methods configured in a block cipher-based operation mode fashion. However, these methods have poor efficiency because a block cipher algorithm needs to be run 10 or more times in order to encrypt a single piece of data. Korean Patent Application Publication No. 10-2005-0069927 discloses a block encryption method and block encryption and decryption circuits.

SUMMARY OF THE INVENTION

Accordingly, at least one embodiment of the present invention is intended to provide a variable-length block cipher apparatus and method that are capable of, when encrypting plaintext having an arbitrary bit length, generating ciphertext having the same bit length, and also decrypting ciphertext into plaintext having the same length.

In accordance with an aspect of the present invention, there is provided an encryption device for a variable-length block cipher apparatus, the encryption device including an encryption key generation unit configured to generate encryption round keys $eRK_0$, $eRK_1$,..., $eRK_{Nr}$ using a secret key and the number of rounds Nr; and a ciphertext output unit configured to output ciphertext having a length identical to that of plaintext using the plaintext and the encryption round keys.

The encryption key generation unit may perform a preset function based on the length of the secret key using the secret key and the number of rounds Nr as inputs, may output $(Nr+1) \times 128$ bit strings, and may generate the encryption round keys $eRK_0$, $eRK_1$,..., $eRK_{Nr}$ each having a 128-bit length using the output result.

The ciphertext output unit may include a first encryption round unit configured to output an encryption round function value while taking into account the location of insertion of the plaintext by using the plaintext, the length of the plaintext and the encryption round key $eRK_0$ as inputs; a second encryption round unit configured to sequentially receive the encryption round function value, output in the previous encryption round, and encryption round key $eRK_1$,..., $eRK_{Nr-1}$, and to output an encryption round function value; and a third encryption round unit configured to receive the encryption round function value, output in the previous encryption round, and the encryption round key $eRK_{Nr}$ and the length of the plaintext, and to output the ciphertext.

The encryption device may further include a secret key generation unit configured to generate the secret key having a length identical to that of a master key using the master key and a tweak.

The secret key generation unit may include a message authentication unit configured to generate message authentication values M[0], M[1], M[2],..., M[15] using the master key and the tweak, and generates the secret key by performing an XOR operation on predetermined bits of the master key and the generated message authentication values.

The master key may have a bit length corresponding to any one of 128 bits, 192 bits and 256 bits, the tweak may have an arbitrary bit length, and the generated message authentication value may have a 128-bit length.

In accordance with another aspect of the present invention, there is provided a decryption device for a variable-length block cipher apparatus, the decryption device including a decryption key generation unit configured to generate decryption round keys $dRK_0$, $dRK_1$,..., $dRK_{Nr}$ using a secret key and a number of rounds Nr; and a plaintext restoration unit configured to restore ciphertext into plaintext having a length identical to that of the ciphertext using the ciphertext and the decryption round keys.

The decryption key generation unit may generate the decryption round keys so that Decrypt(Encrypt(P, eRK), dRK) = P (where P is the plaintext, eRK is the encryption round keys, and dRK is the decryption round keys) is satisfied.

The plaintext restoration unit may include a first decryption round unit configured to output a decryption round function value while taking into account the location of insertion of the ciphertext by using the ciphertext, the length of the plaintext and the decryption round key $dRK_0$ as inputs; a second decryption round unit configured to sequentially receive the decryption round function value, output in the previous decryption round, and the decryption round keys $dRK_1,..., dRK_{Nr-1}$, and to output a decryption round function value; and a third decryption round unit configured to receive the decryption round function value, output in the previous decryption round, the decryption round key $dRK_{Nr}$ and the length of the plaintext, and to restore the ciphertext into the plaintext.

In accordance with still another aspect of the present invention, there is provided an encryption method for a variable-length block cipher method, the encryption method including generating encryption round keys $eRK_o, eRK_1,..., eRK_{Nr}$ using a secret key and a number of rounds Nr; and outputting ciphertext having a length identical to that of plaintext using the plaintext and the encryption round keys.

Generating the encryption round keys $eRK_o, eRK_1,..., eRK_{Nr}$ may include performing a preset function based on the length of the secret key using the secret key and the number of rounds Nr as inputs, and then outputting $(Nr+1) \times 128$ bit strings; and generating the encryption round keys $eRK_o, eRK_1,..., eRK_{Nr}$ each having a 128-bit length using the output $(Nr+1) \times 128$ bit strings.

Outputting the ciphertext may include outputting an encryption round function value while taking into account the location of insertion of the plaintext by using the plaintext, the length of the plaintext and the encryption round key $eRK_o$ as inputs; sequentially receiving the encryption round function value, output in the previous encryption round, and encryption round key $eRK_1,..., eRK_{Nr-1}$, and outputting an encryption round function value; and receiving the encryption round function value, output in the previous encryption round, and the encryption round key $eRK_{Nr}$ and the length of the plaintext, and outputting the ciphertext.

In accordance with still another aspect of the present invention, there is provided a decryption method for a variable-length block cipher method, the decryption method including generating decryption round keys $dRK_0, dRK_1,..., dRK_{Nr}$ using a secret key and the number of rounds Nr; and restoring ciphertext into plaintext having a length identical to that of the ciphertext using the ciphertext and the decryption round keys.

Generating the decryption round keys may include generating the decryption round keys so that Decrypt(Encrypt(P, eRK), dRK) = P (where P is the plaintext, eRK is the encryption round keys, and dRK is the decryption round keys) is satisfied.

Restoring the ciphertext may include outputting a decryption round function value while taking into account the location of insertion of the ciphertext by using the ciphertext, the length of the plaintext and the decryption round key dRK0 as inputs; sequentially receiving the decryption round function value, output in the previous decryption round, and the decryption round keys $dRK_1,..., dRK_{Nr-1}$, and outputting a decryption round function value; and receiving the decryption round function value, output in the previous decryption round, the decryption round key $dRK_{Nr}$ and the length of the plaintext, and restoring the ciphertext into the plaintext.

BRIEF DESCRIPTION OF THE DRAWINGS

The above and other objects, features and advantages of the present invention will be more clearly understood from the following detailed description taken in conjunction with the accompanying drawings, in which:

FIG. 1 is a block diagram of the encryption device of a variable-length block cipher apparatus according to an embodiment of the present invention;
FIGS. 2 to 21 are examples of algorithms and data that are used in the encryption device of FIG. 1;
FIG. 22 is a block diagram of the decryption device of a variable-length block cipher apparatus according to an embodiment of the present invention;
FIGS. 23 to 31 are examples of algorithms and data that are used in the decryption device of FIG. 22;
FIG. 32 is a block diagram of the secret key generation device of a variable-length block cipher apparatus according to an embodiment of the present invention;
FIG. 33 is a flowchart of an encryption method that is performed by the encryption device of the variable-length block cipher apparatus according to an embodiment of the present invention; and
FIG. 34 is a flowchart of an encryption method that is performed by the decryption device of the variable-length block cipher apparatus according to an embodiment of the present invention.

DESCRIPTION OF THE PREFERRED EMBODIMENTS

The other details of embodiments are included in the following detailed description and the diagrams. The advantages and features of the disclosed technology and methods of achieving them will be apparent from embodiments that will be described with reference to the accompanying drawings. Throughout the specification and the drawings, the same reference numerals designate the same or like components.

A variable-length block cipher apparatus and method capable of format preserving encryption according to embodiments of the present invention are described in detail below with reference to the accompanying diagrams.

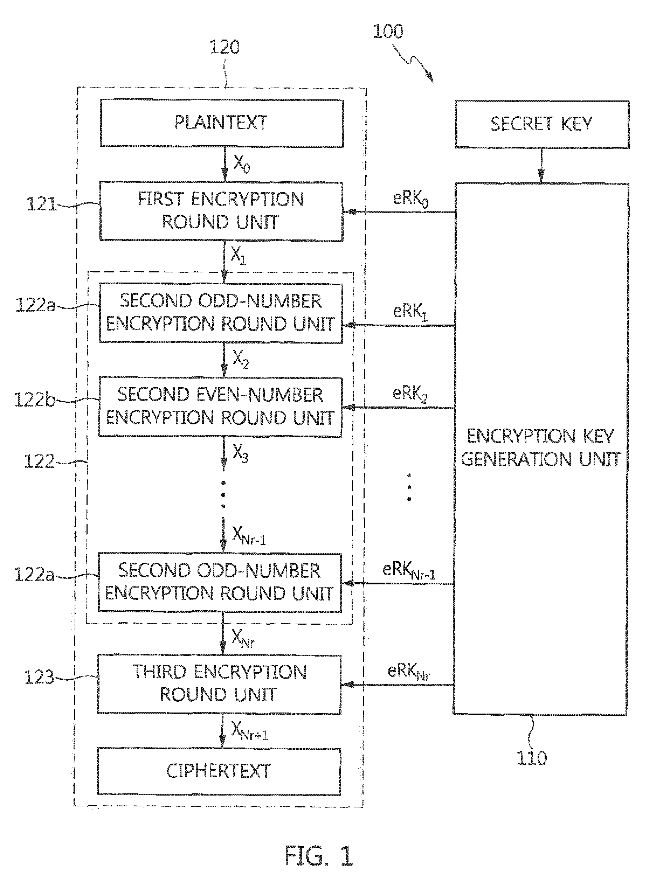

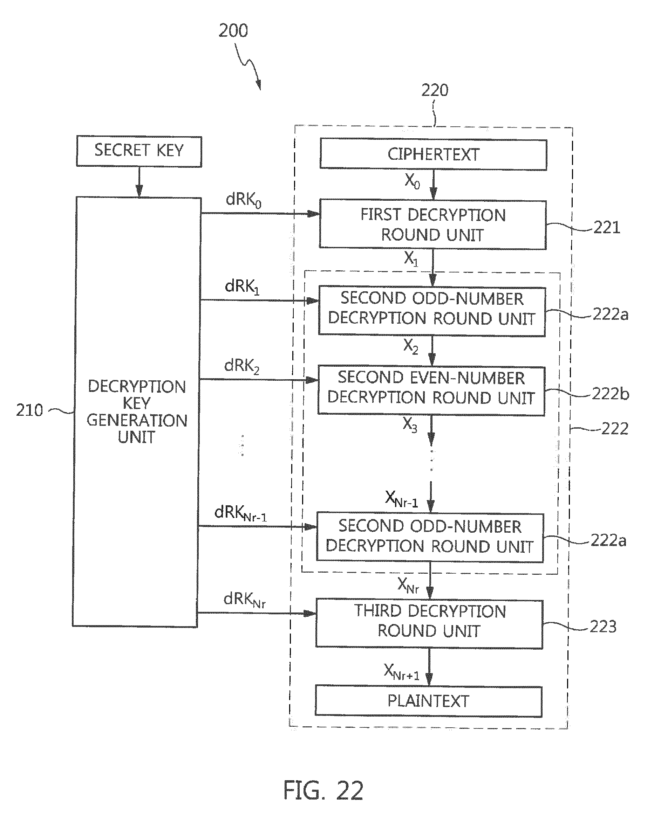

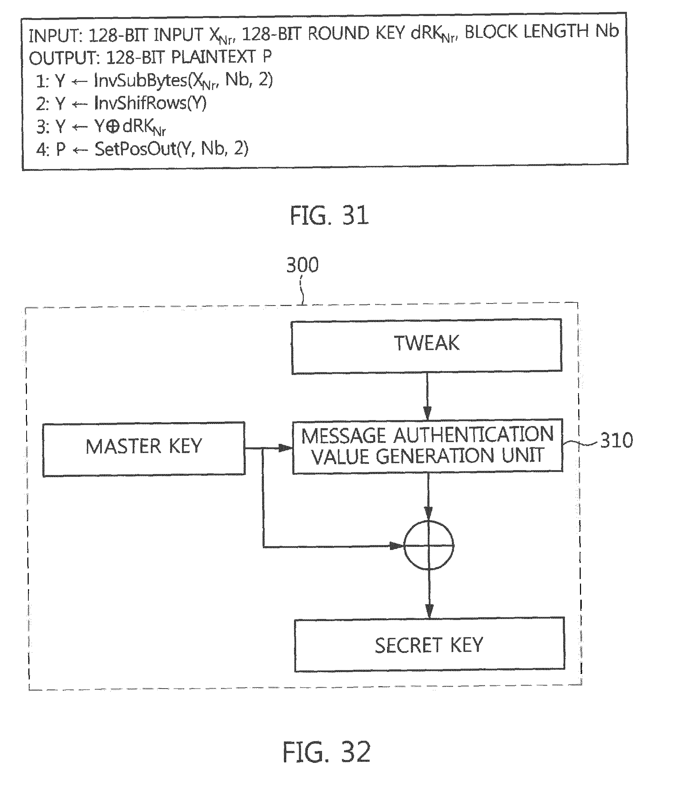

A variable-length block cipher apparatus according to an embodiment of the present invention may include an encryption device 100 to be described with reference to FIG. 1, a decryption device 200 to be described with reference to FIG. 22, and a secret key generation device 300 to be described with reference to FIG. 32. In this case, the secret key generation device 300 may be a device separate from the encryption device 100 and the decryption device 200. Alternatively, the secret key generation device 300 may be implemented to be included in the encryption device 100 or the decryption device 200 if necessary.

In the following description, an $\oplus$ operation used throughout the accompanying diagrams refers to an exclusive OR (XOR) operation. For example, $x \oplus y$ refers to a per-bit XOR operation of two bit strings or two byte strings x and y. Furthermore, a mod operation refers to an operation that finds the remainder of division of a specific value by another number.

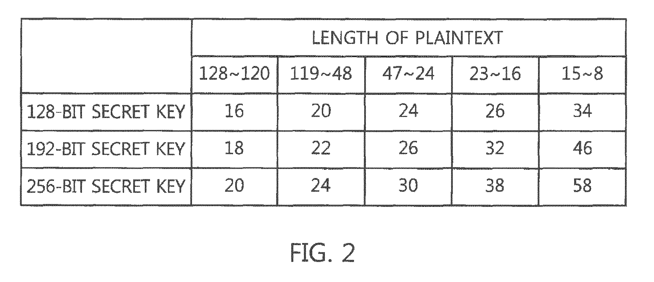

FIG. 1 is a block diagram of the encryption device 100 of a variable-length block cipher apparatus according to an embodiment of the present invention. FIGS. 2 to 21 are examples of algorithms and data that are used in the encryption device of FIG. 1.

Referring to FIGS. 1 to 21, the encryption device 100 of the variable-length block cipher apparatus is described. As illustrated in FIG. 1, the encryption device 100 includes an encryption key generation unit 110 and a ciphertext output unit 120.

The encryption key generation unit 110 receives a secret key K, and generates encryption round keys eRK using the input secret key K and the number of rounds Nr.

In this case, the secret key K has a length corresponding to any one of 128 bits, 192 bits and 256 bits, and may be formed by successively connecting 8-bit sub keys. That is, the secret key K may be a 128-bit secret key K = K[0]||K[1]||K[2]||...|K[15] formed by successively connecting 16 8-bit sub keys K[0], K[1], K[2],..., K[15], a 192-bit secret key K = K[0]||K[1]||K[2||...|K[23] formed by successively connecting 24 8-bit sub key K[0], K[1], K[2],..., K[23], or a 256-bit secret key K = K[0]||K[1]||K[2]||...|K[31] formed by successively connecting 32 sub key K[0], K[1], K[2],...,K[31].

Meanwhile, FIG. 2 illustrates examples of the number of rounds Nr. The number of rounds Nr is set based on the length Nb of plaintext P and the length Nk of a secret key in advance, and may be set to an appropriate value in advance by taking into account the stability of a variable-length block cipher algorithm.

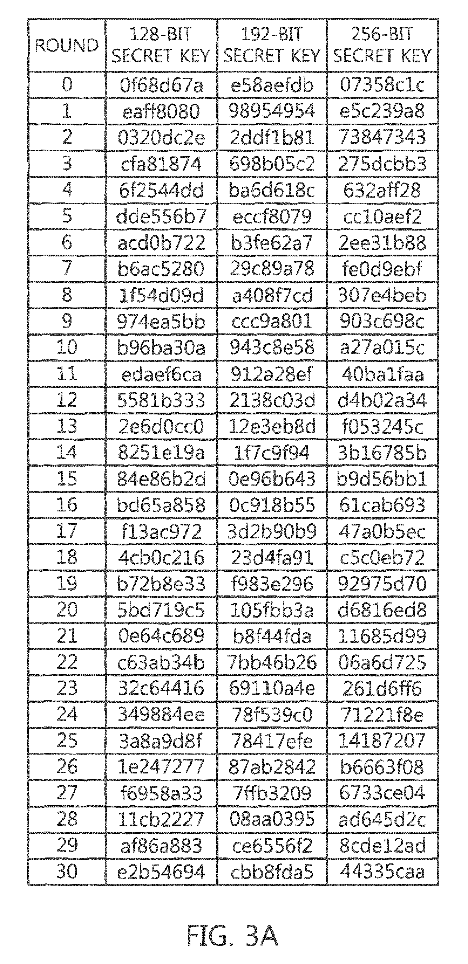

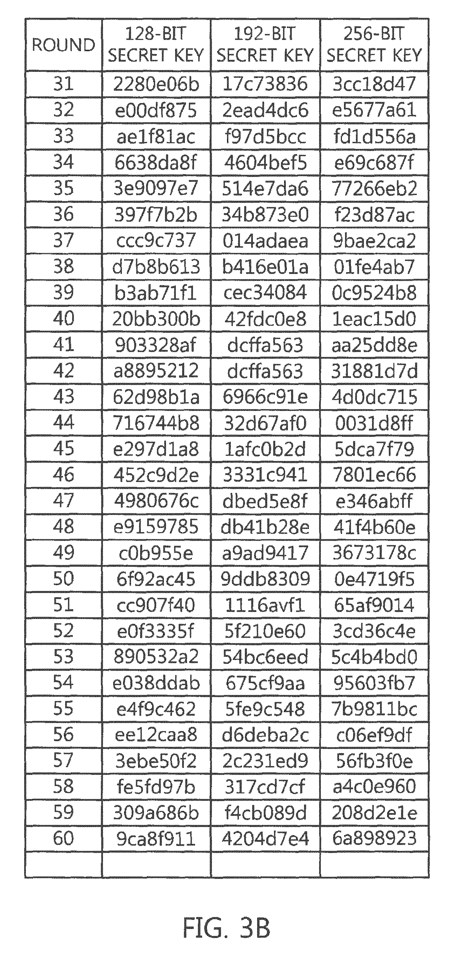

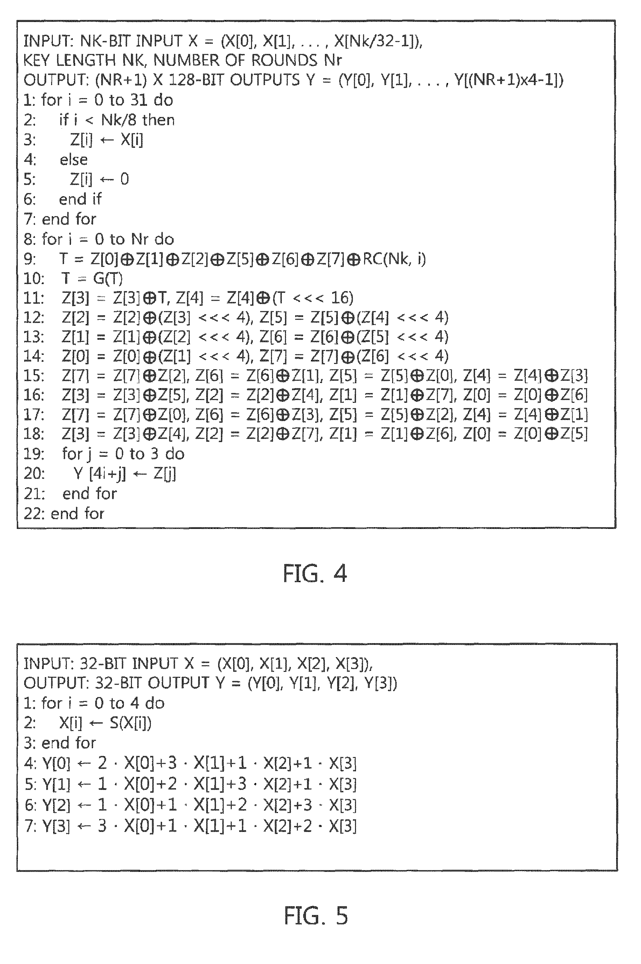

Furthermore, FIGS. 3A and 3B illustrates round constants RC, which are arbitrary constants that are used in respective rounds in which encryption round keys eRK are generated. FIG. 4 illustrates an example of an algorithm that is used by the encryption key generation unit 110 to generate encryption round keys eRK.

The encryption key generation unit 110 may receive a secret key K = K[0], K[1],..., K[Nk/8-1], the preset number of rounds Nr and a round constant RC and perform an algorithm, such as that illustrated in FIG. 4, thereby generating (Nr+1) 128-bit encryption round keys $eRK_i = eRK_i[0], eRK_i[1],..., eRK_i[15]$, $0 \le i \le Nr$.

For example, the encryption key generation unit 110 may output (Nr+1)$\times$128 bit strings using a 128-bit secret key K = K[0], K[1],..., K[15], a 192-bit secret key K = K[0], K[1],..., K[23] or a 256-bit secret key K = K[0], K[1],..., K[31] depending on the length of the secret key K, the number of rounds Nr and a preset round constant RC, as illustrated in FIG. 4. FIG. 5 illustrates an example of the algorithm of a G() function that is used when the encryption key generation unit 110 generates encryption round keys eRK using the algorithm illustrated in FIG. 4.

The encryption key generation unit 110 generates (Nr+1) 128-bit encryption round keys $eRK_i = eRK_i[0]$, $eRK_i[1],..., eRK_i[15]$, $0 \le i \le Nr$ using the output (Nr+1)$\times$128 bit strings.

The ciphertext output unit 120 may output ciphertext C having a length Nb identical to an output plaintext P using the plaintext P and the generated encryption round keys eRK.

Referring to FIG. 1, the ciphertext output unit 120 may include a first encryption round unit 121, a second encryption round unit 122, and a third encryption round unit 123.

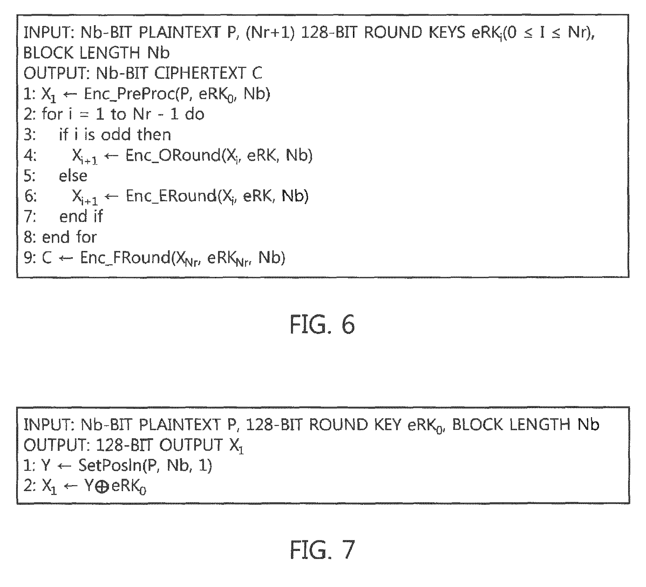

FIG. 6 illustrates an example of an algorithm that is performed by the ciphertext output unit 120. This is described in greater detail with reference to FIG. 6. The first encryption round unit 121 may perform the encryption preprocessing function "Enc_PreProc()" using plaintext P, the first encryption round key eRKo of generated (Nr+1) encryption round keys eRKo, $eRK_1,..., eRK_{Nr}$ and the length Nb of the plaintext, and may output an initial encryption round function value while taking into account the location of insertion of the plaintext P.

The algorithm of the Enc_PreProc() function is illustrated in FIG. 7. The Enc_PreProc() function outputs an initial state for the encryption of a 128-bit string by inputting plaintext P having an arbitrary length in the range of 8 to 128-bits, the length Nb of the plaintext and a preset flag into a SetPosIn() function, and outputs a 128-bit initial encryption round function value by performing an XOR operation on the result of the performance of the function and the encryption round key eRKo.

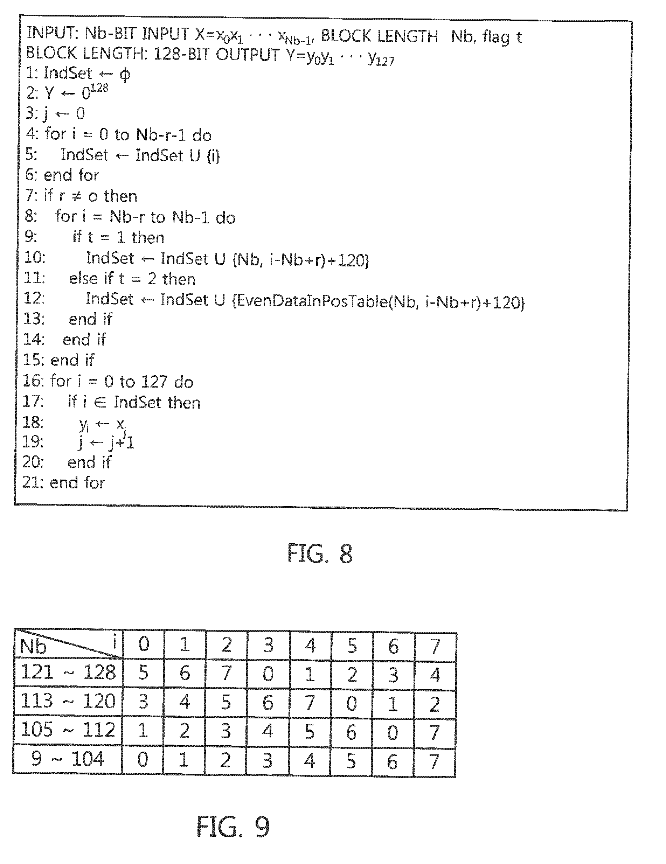

In this case, the algorithm of the SetPosIn() function is illustrated in FIG. 8. This algorithm may perform an EvenDataInPosTable() function that uses the length Nb of the plaintext P and an arbitrary integer value in the range of 0 to 7, and may output an integer in the range of 0 to 7 while taking into account the location of insertion of plaintext data. The EvenDataInPosTable() function is illustrated in FIG. 9.

The second encryption round unit 122 sequentially receives the encryption round function value, output in the previous encryption round, and the encryption round keys $eRK_1$,..., $eRK_{Nr-1}$, and then outputs an encryption round function value.

In this case, the second encryption round unit 122 may include a second odd-number encryption round unit 122a configured to perform an odd-numbered encryption round and output an encryption round function value, and a second even-number encryption round unit 122b configured to perform an even-numbered encryption round and output an encryption round function value.

The second odd-number encryption round unit 122a inputs the encryption round function value, output in a previous round, and the encryption round keys $eRK_1$, $eRK_3$, $eRK_5$,..., $eRK_{Nr-1}$ into an Enc_ORound() function, and performs the Enc_ORound() function, and then outputs an encryption round function value.

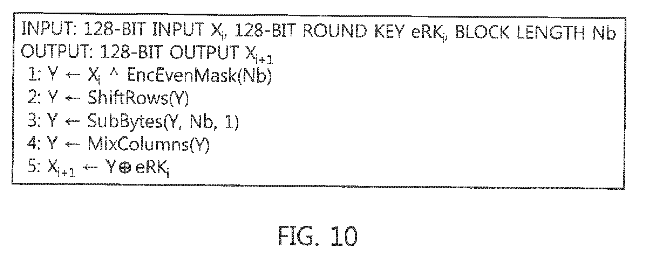

The Enc_ORound() function is illustrated in FIG. 10. The Enc_ORound() function performs a per-bit AND operation on the result of the performance of the EncOddMask() function and the encryption round function value output in the previous round, performs ShiftRows(), SubBytes() and MixColumns() functions, and finally performs an XOR operation on the result of the performance of these functions and the encryption round keys, and then outputs a 128-bit string.

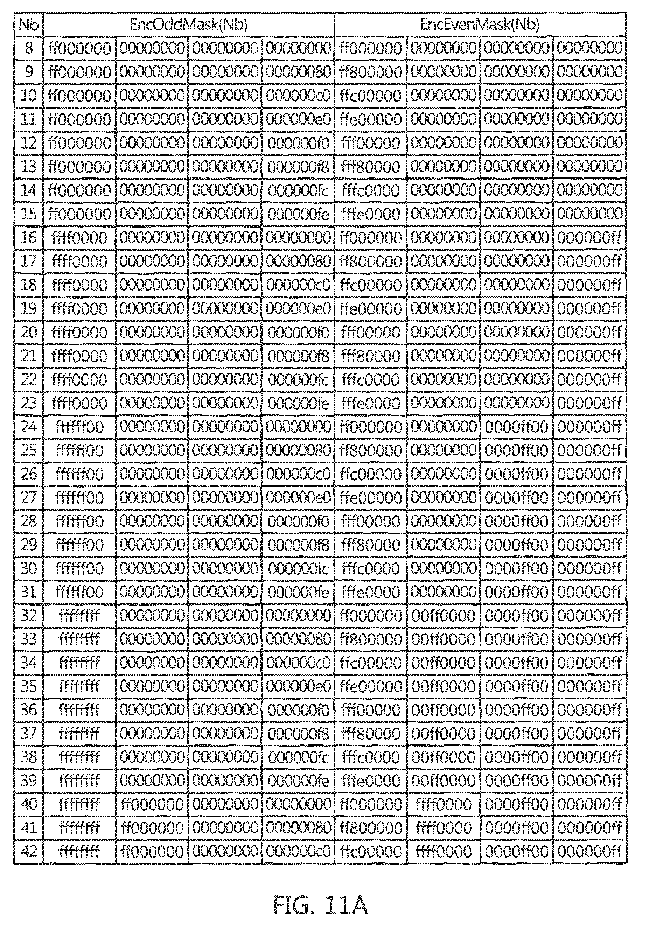

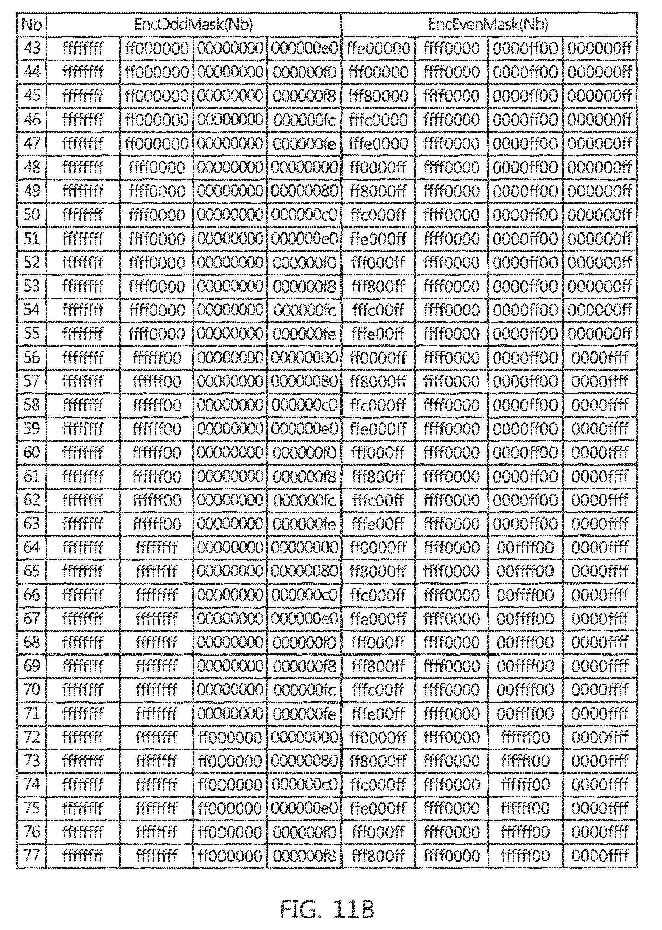

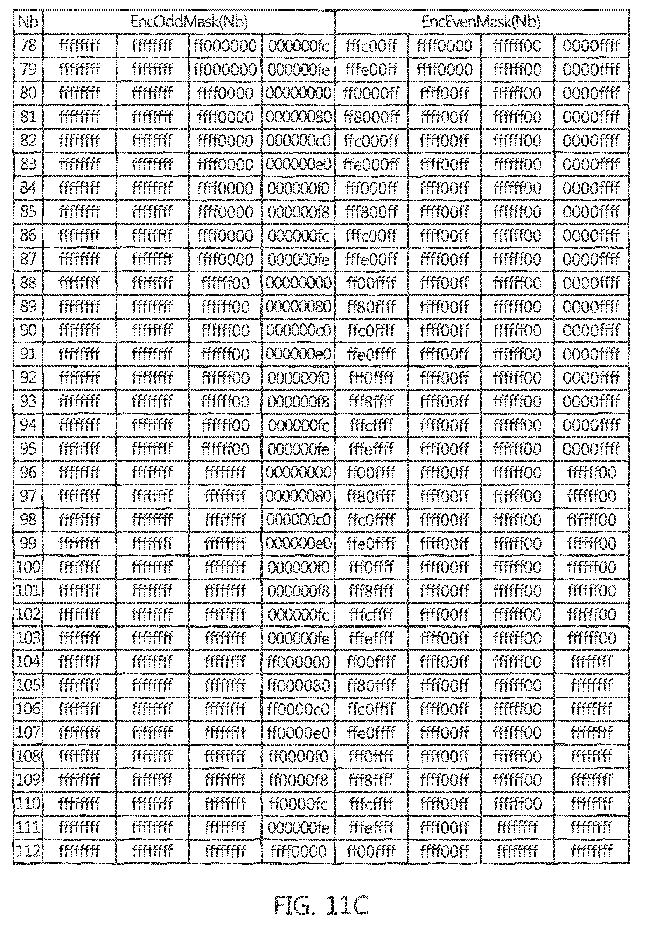

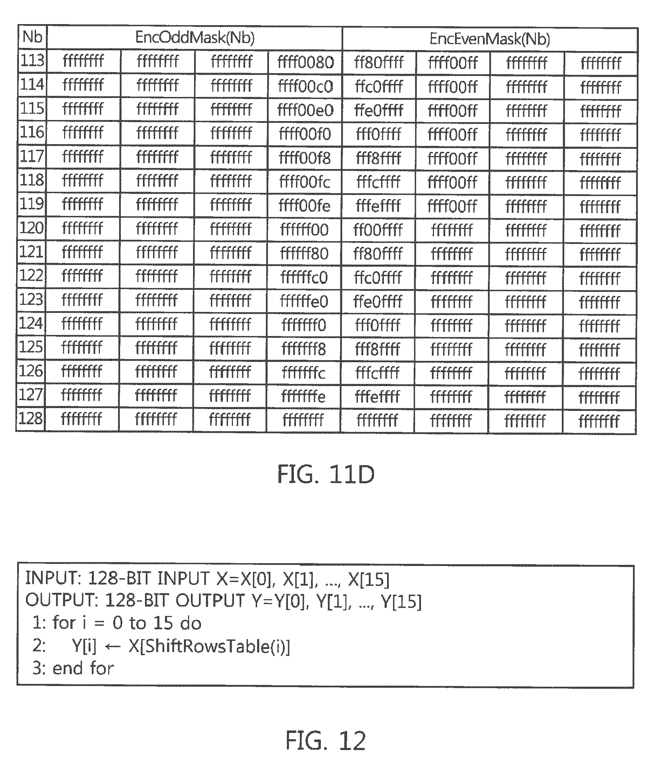

In this case, the EncOddMask() function is illustrated in FIGS. 11A to 11D. The EncOddMask() function may receive the length Nb of the plaintext, and may output a 128-bit string to be used in an odd-numbered round.

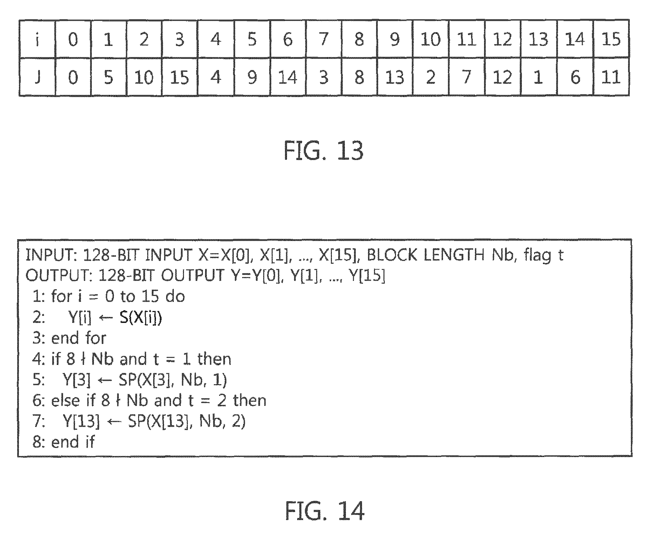

The ShiftRows() function is illustrated in FIG. 12. The ShiftRows() function receives a 16-byte string, and outputs a 16-byte string in which the locations of bytes have been changed. The ShiftRows() changes the location numbers of respective 16 bytes by performing a ShiftRowsTable() function. In this case, the ShiftRowsTable() function is illustrated in FIG. 13.

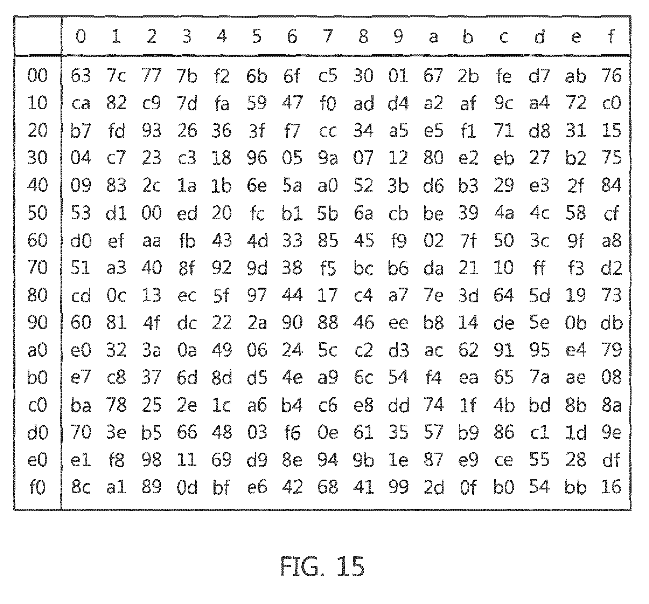

The SubBytes() function is illustrated in FIG. 14. The SubBytes() function receives a 16-byte string, the length Nb of the plaintext and a flag, substitutes new bytes for respective bytes, and then outputs a 16-byte string. The SubBytes() performs an S() function and an SP() function, and outputs a 128-bit string. In this case, the S() function is illustrated in FIG. 15. In order to ensure the security of variable-length block cipher, the S() function is an one-to-one function that receives a byte configured to have properties, such as a small linear probability, a differential probability and a high algebraic degree, and outputs a byte.

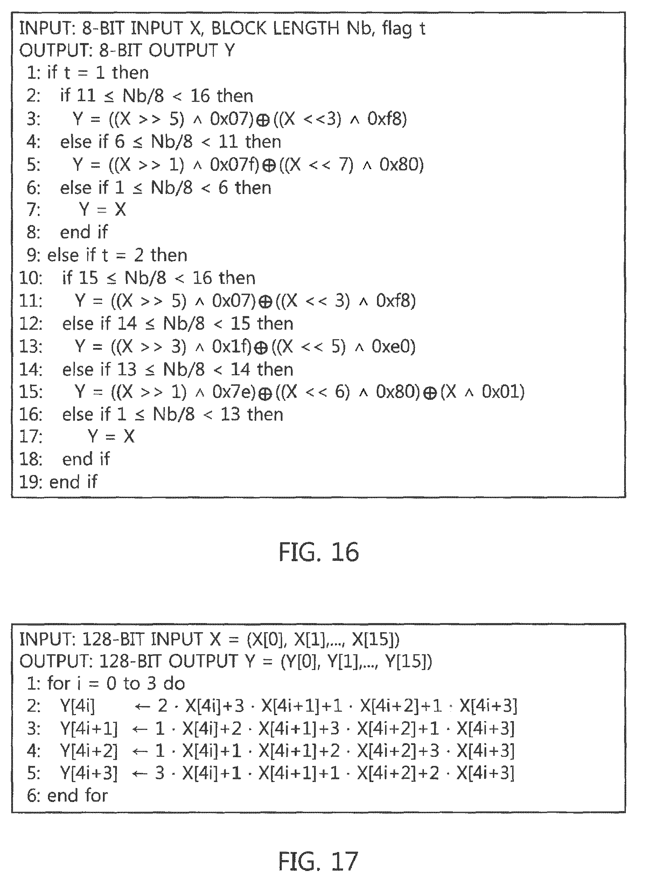

Furthermore, the SP() function is illustrated in FIG. 16. The SP() function is an one-to-one function that receives a byte configured to adjust the locations of a message and a tweak in accordance with an embodiment, the length of plaintext and a flag, and outputs a byte in which the locations of the bits of the byte have been exchanged.

Furthermore, the MixColumns() function is illustrated in FIG. 17. In order to ensure the security of variable-length block cipher using a diffusion effect, the MixColumns() function receives a 16-byte string and outputs a 16-byte string. In this case, each byte of each byte string may be considered to be an element of a finite field GF 28 defined by the irreducible polynomial $p(x) = x^8+x^4+x^3+x+1$. In the MixColumns() function, addition and multiplication related to X[i] may be operations that are defined in a corresponding finite field.

The second even-number encryption round unit 122b inputs the encryption round function value, output in the previous round, and encryption round keys $eRK_2$, eRK4, $eRK_6$,..., $eRK_{Nr-2}$ into an Enc_ERound() function, performs the Enc_ERound() function, and then outputs an encryption round function value.

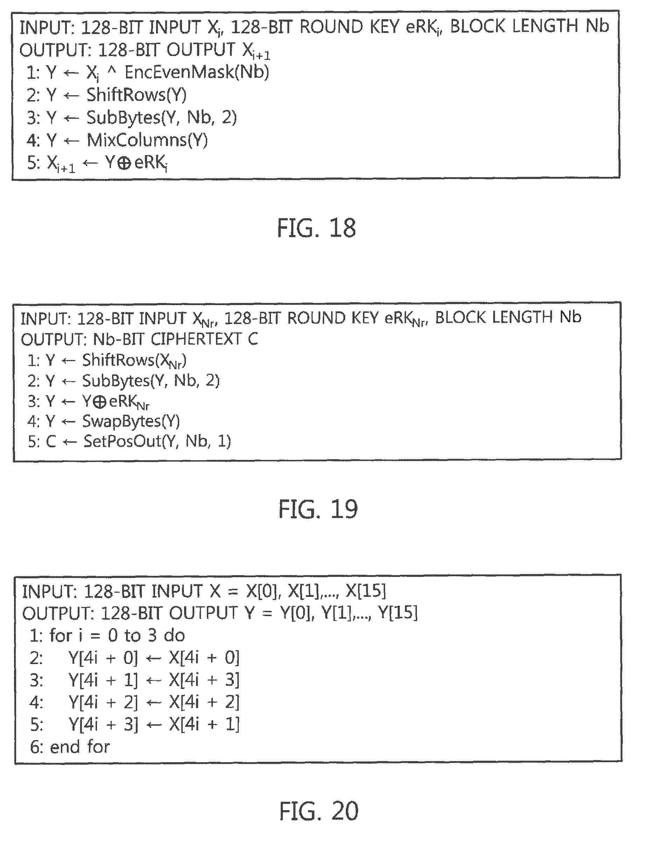

The Enc_ERound() is illustrated in FIG. 18. The Enc_ERound() function performs a per-bit AND operation on the result of the performance of the EncEvenMask() and the encryption round function value output in the previous round, performs ShiftRows(), SubBytes() and MixColumns() functions, and finally performs an XOR operation on the result of the performance of these functions and the encryption round keys, thereby outputting an encryption round function value of a 128-bit string.

The EncEvenMask() function is illustrated in FIGS. 11A to 11D. The EncEvenMask() function may receive the length Nb of the plaintext, and may output a 128-bit string to be used in an even-numbered round. The ShiftRows(), SubBytes() and MixColumns() functions are the same as described above.

The third encryption round unit 123 inputs the previous encryption round function value, the last encryption round key $eRK_{Nr}$ and the length Nb of the plaintext into an Enc_FRound() function, performs the Enc_FRound() function, and finally outputs ciphertext C having a length identical to the length Nb of the plaintext.

The Enc_FRound() function is illustrated in FIG. 19. Referring to FIG. 19, the Enc_FRound() function receives the previous encryption round function value of the 128-bit string, the 128-bit encryption round key $dRK_{Nr}$ and the length Nb of the plaintext, performs the above-described ShiftRows() and SubBytes() functions, performs an XOR operation the result of the performance of these functions and the encryption round key $dRK_{Nr}$, and sequentially performs a SwapBytes() function and a SetPosOut() function.

In this case, the SwapBytes() function is illustrated in FIG. 20. The SwapBytes() function receives a 16-byte string, and outputs a 16-byte string.

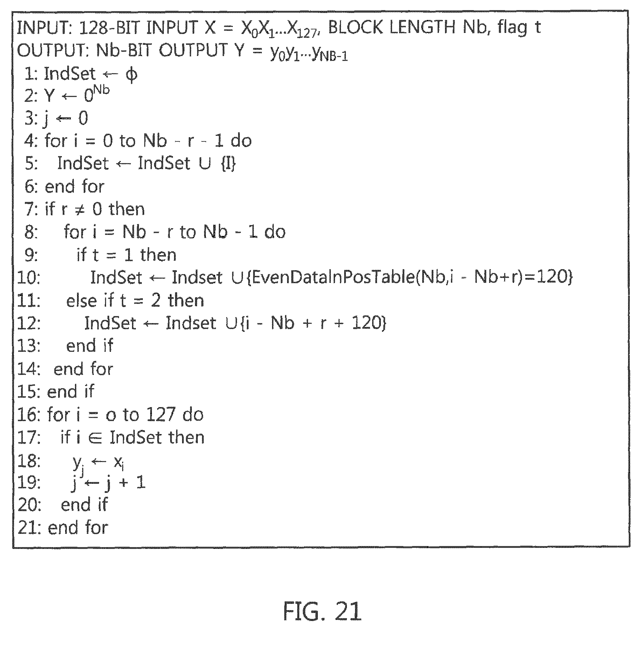

Furthermore, the SetPosOut() function is illustrated in FIG. 21. The SetPosOut() function receives the encryption internal state of a 128-bit string, the length Nb of the plaintext, and a preset arbitrary flag, and outputs ciphertext C having a predetermined length Nb.

Meanwhile, encryption device 100 may include a secret key generation unit (not illustrated). In this case, the secret key generation unit (not illustrated) may be a secret key generation device 300 illustrated in FIG. 32, which will be described in detail with reference to FIG. 32.

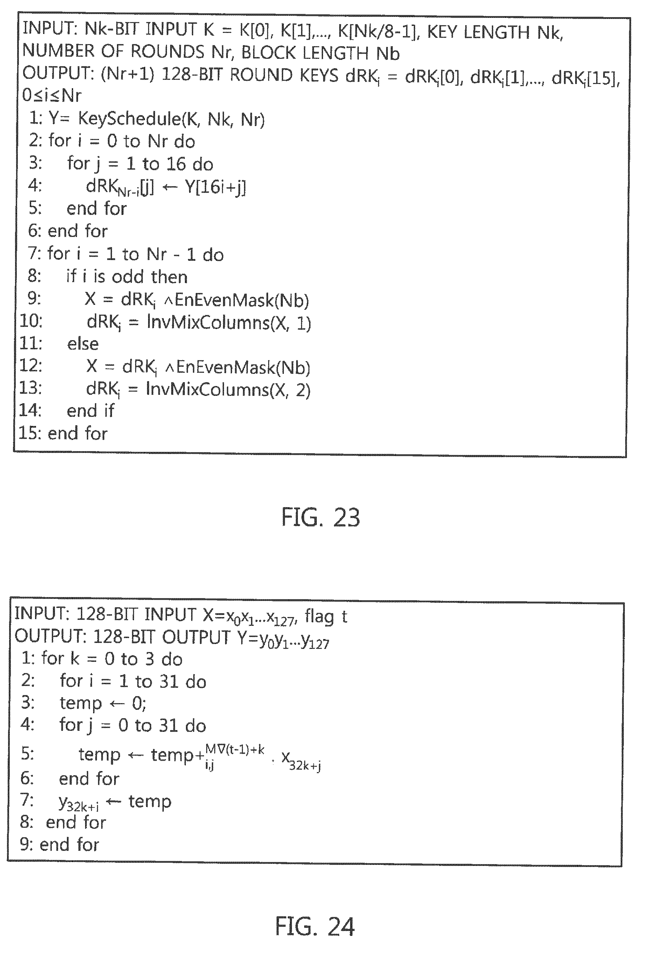

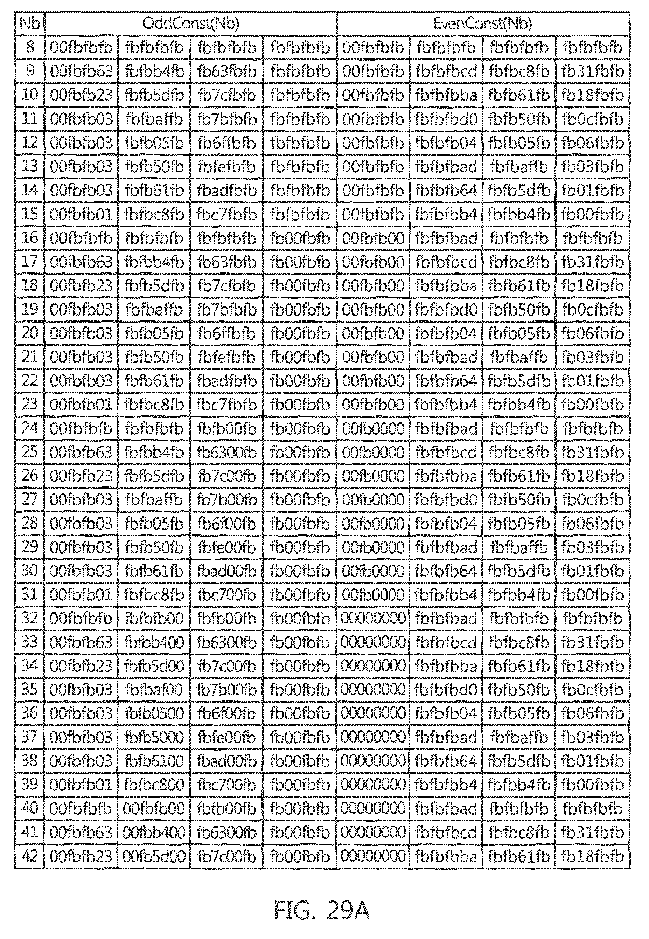

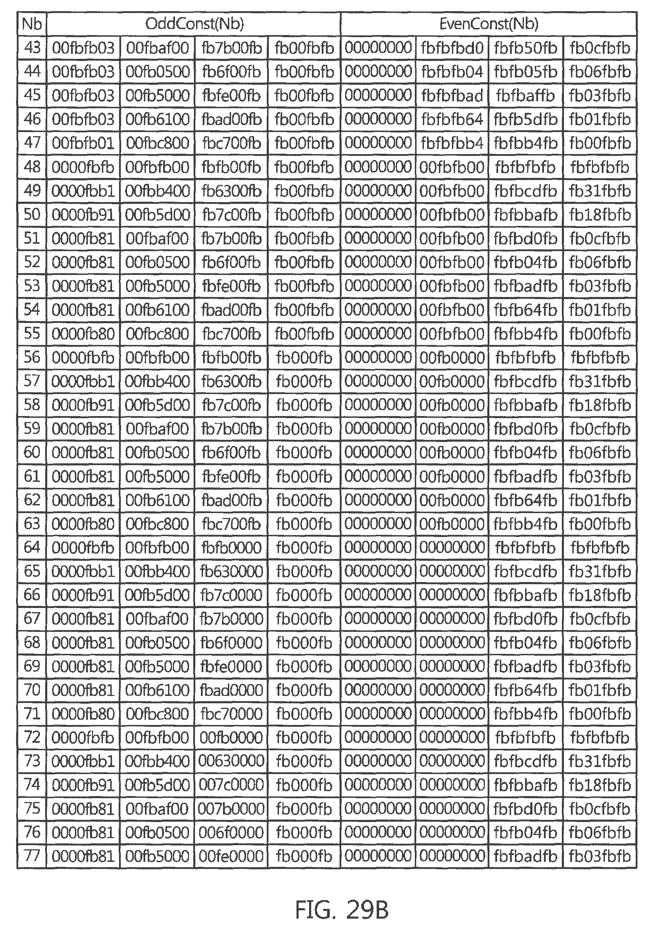

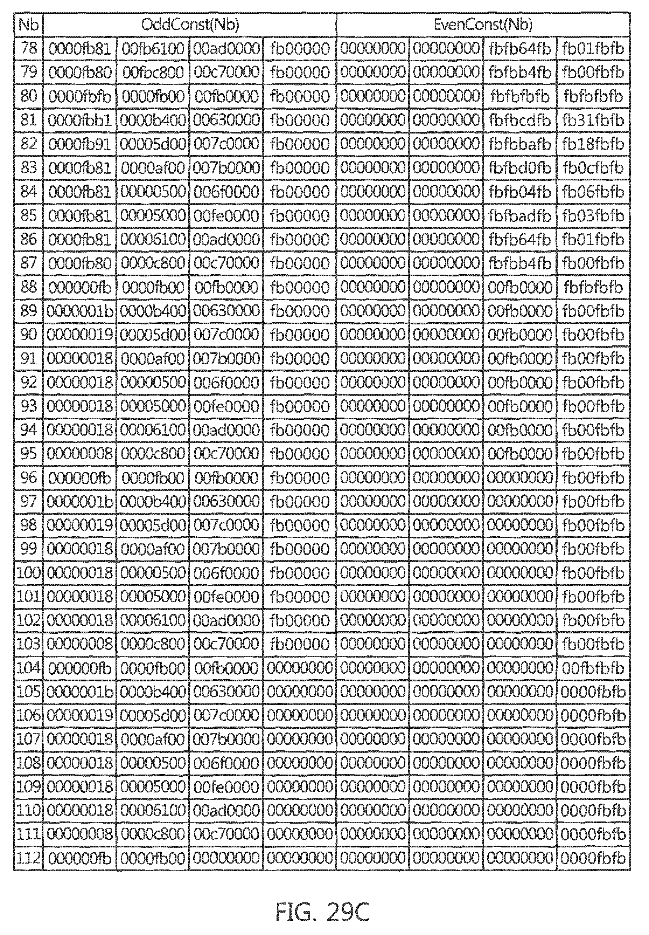

FIG. 22 is a block diagram of the decryption device of the variable-length block cipher apparatus according to an embodiment of the present invention. FIGS. 24 to 34 are examples of algorithms and data that are used in the decryption device of FIG. 22. In the following description, functions having the same names as those of the functions described in conjunction with the encryption device 100 are functions having the same functionalities as those of the functions described in conjunction with the encryption device 100.

Referring to FIG. 22, a decryption device 200 according to an embodiment of the present invention includes a decryption key generation unit 210 and a plaintext restoration unit 220.

The decryption key generation unit 210 generates a decryption round key dRK so that the decryption round key dRK satisfies the following Equation 1 using the number of rounds Nr appropriately set based on a secret key K and the length Nk of a secret key and the length Nb of plaintext.

In this case, the secret key K has a length corresponding to any one of 128 bits, 192 bits and 256 bits as described above. Furthermore, the number of rounds Nr is set based on the length Nb of the plaintext P and the length Nk of the secret key K, as illustrated in FIG. 2 in advance, and may be set to an appropriate value by taking into account the security of a variable-length block cipher algorithm.

$$\mathrm{Decrypt}(\mathrm{Encrypt}(P, eRK), dRK = P$$

$$(1)$$

In this case, the Decrypt() function may refer to the plaintext restoration unit 220 of the decryption device 200, and the Encrypt() function may refer to the ciphertext output unit 120 of the encryption device 100.

The decryption key generation unit 210 performs an algorithm illustrated in FIG. 23 using a secret key K and the number of rounds Nr, and, thus, may generate (Nr+1) decryption round keys $dRK_0$, $dRK_1$,..., $dRK_{Nr}$ so that they satisfy Equation 1. FIG. 24 illustrates an example of the InvMixColumns() function algorithm of the algorithm of FIG. 23 that is performed by the decryption key generation unit 210.

The plaintext restoration unit 220 receives ciphertext C, a decryption round key dRK and a decryption round tweak dTW, and restores the ciphertext C into plaintext.

Referring to FIG. 22, the plaintext restoration unit 220 may include a first decryption round unit 221, a second decryption round unit 222, and a third decryption round unit 223.

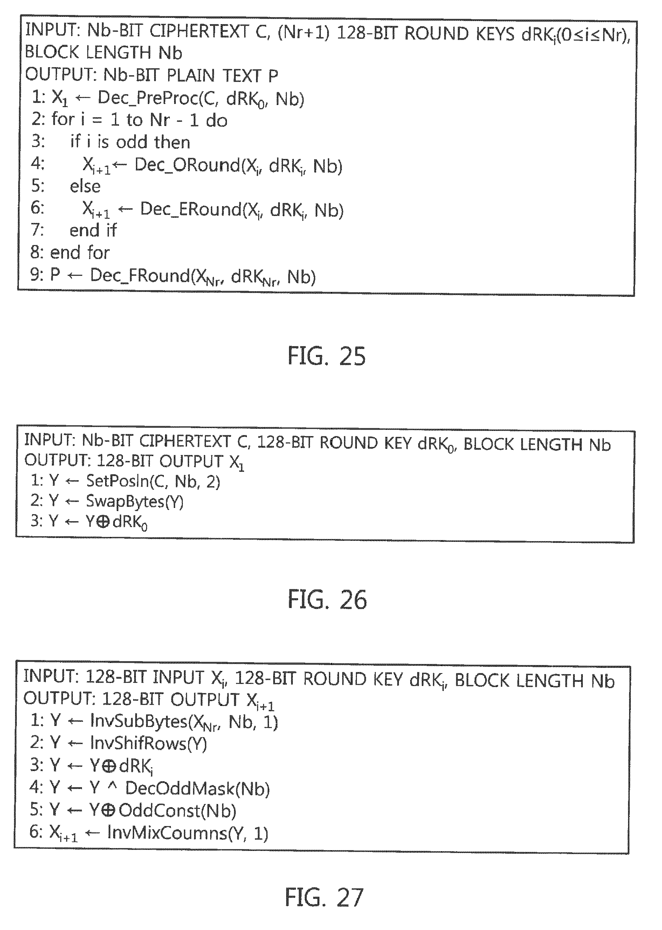

FIG. 25 illustrates an example of an algorithm that is performed by the plaintext restoration unit 220. Referring to FIG. 25, the first decryption round unit 221 may perform the decryption preprocessing function "Dec_PreProc()" using the ciphertext C, the first decryption round key $dRK_0$ of the generated (Nr+1) decryption round keys $dRK_0$, $dRK_1$,..., $dRK_{Nr}$ and the length Nb of the plaintext, and may output an initial decryption round function value.

The algorithm of the Dec_PreProc() function is illustrated in FIG. 26. The Dec_PreProc() function sequentially performs a SetPosIn() function and a SwapBytes() function using ciphertext C, the length Nb of the plaintext and a preset flag as inputs, performs an XOR operation on the result of the performance of these functions and the decryption round key $dRK_0$, and outputs a 128-bit initial decryption round function value.

The second decryption round unit 222 sequentially receives the decryption round function value, output in the previous decryption round, and the decryption round keys $dRK_1$,..., $dRK_{Nr-1}$, and outputs a decryption round function value.

In this case, the second decryption round unit 222 may include a second odd-number decryption round unit 222a configured to perform an odd-numbered decryption round and output a decryption round function value, and a second even-number decryption round unit 222b configured to perform an even-numbered decryption round and output a decryption round function value.

The second odd-number decryption round unit 222a inputs the decryption round function value, output in the previous round, and the decryption round keys $DRK_1$, $dRK_3$, $dRK_5$,..., $dRK_{Nr-1}$ into an Dec_ORound() function, performs the Dec_ORound function, and outputs a decryption round function value.

The Dec_ORound function is illustrated in FIG. 27. The Dec_ORound function sequentially performs an InvSubBytes() function and an InvShiftRows() function, performs an XOR operation on the result of the performance of these functions and the decryption round keys, and performs an AND operation of the immediately previous result and the result of the performance of the DecOddMask() function. Thereafter, the Dec_ORound function performs an XOR operation on the immediately previous result and the result of the performance of the OddConst function, performs an InvMixColumns() function, and outputs a 128-bit string.

In this case, the InvSubBytes() function receives an 16-byte string, the length Nb of the plaintext and a preset flag, and outputs a 16-byte string in which new bytes have been substituted for respective bytes. The InvSubBytes() function satisfies the following Equation 2 with respect to every 16-byte string X and the length Nb of the plaintext in the range of 8 to 128:

$$\mathrm{InvSubBytes}(\mathrm{SubBytes}(X, Nb, 1), Nb, 2) = X$$
$$\mathrm{InvSubBytes}(\mathrm{SubBytes}(X, Nb, 2), Nb, 1) = X$$

$$(2)$$

In this case, the third parameters 1 and 2 of the SubBytes() function and the InvSubBytes() function are preset flags, and the SubBytes() function is illustrated in FIG. 14, as described above.

Furthermore, the InvShiftRows() function receives a 16-byte string, and outputs a 16-byte string in which the locations of bytes have been changed. The InvShiftRows() function is the inverse operation of the above-described ShiftRows()function, and satisfies the following Equation 4 with respect to every 16-byte string X:

$$\mathrm{InvShiftRows}(\mathrm{ShiftRows}(X)) = X$$

$$(3)$$

The InvMixColumns() function receives a 16-byte string, the length of plaintext and a flag, and outputs a 16-byte string. This InvMixColumns() function satisfies the following Equation 4 with respect to every 16-byte string X and the length Nb of the plaintext in the range from 8 bits to 128 bits:

$$\mathrm{InvMixColumns}(\mathrm{MixColumns}(X \oplus \mathrm{EncEvenMask}(Nb)) \oplus \mathrm{DecOddMask}(Nb), 1)$$
$$= X \oplus \mathrm{DecOddMask}(Nb)$$
$$\mathrm{InvMixColumns}(\mathrm{MixColumns}(X \oplus \mathrm{EncEvenMask}(Nb)) \oplus \mathrm{DecOddMask}(Nb), 2)$$
$$= X \oplus \mathrm{DecEvenMask}(Nb)$$

$$(4)$$

Meanwhile, the MixColumns() function and the InvMixColumns() function may be also presented by matrix products. If a matrix representing the MixColumns() function is "A," a matrix representing the InvMixColumns() function is "B," $(X, C)^T$ is the input of the MixColumns() function, $(Y, *)^T$ is the output of the MixColumns() function, and "C" is a constant part, the following Equation 5 may be satisfied:

$$A \cdot (X, C)^T = (Y, *)^T$$
$$B \cdot (Y, C)^T = (X, O)^T$$

$$(5)$$

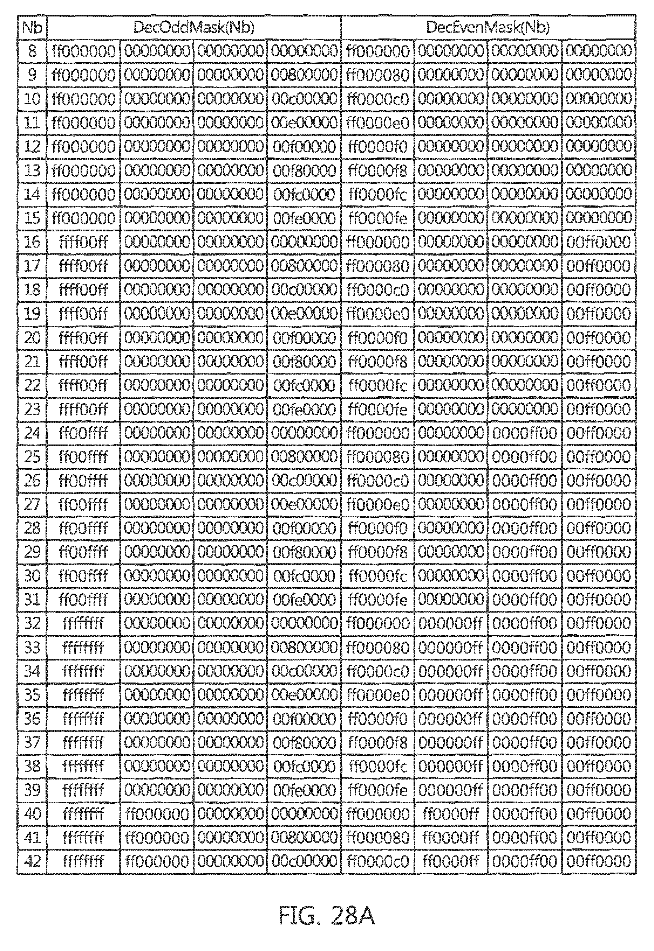

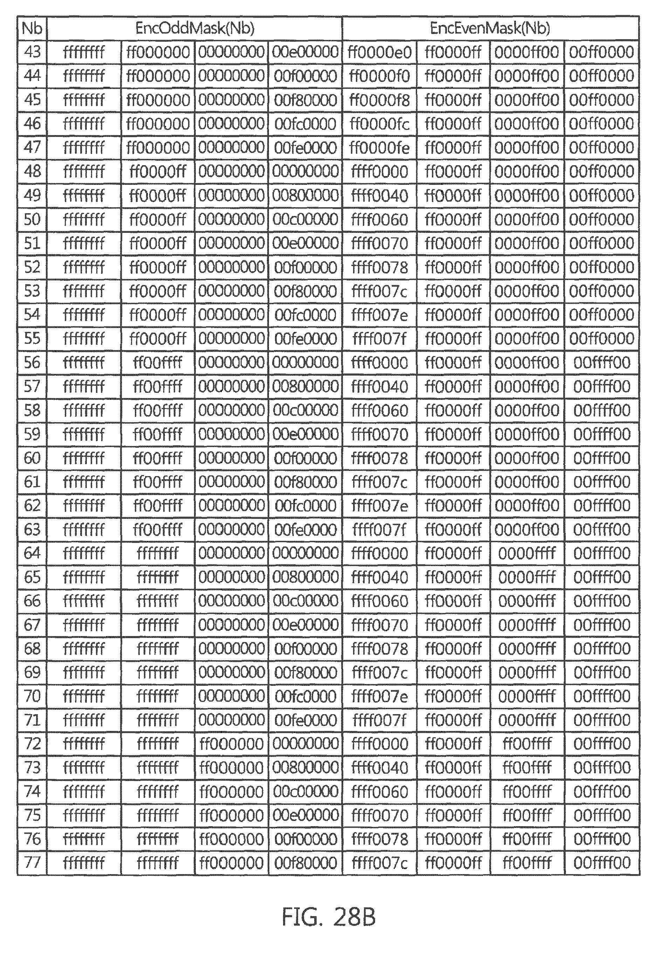

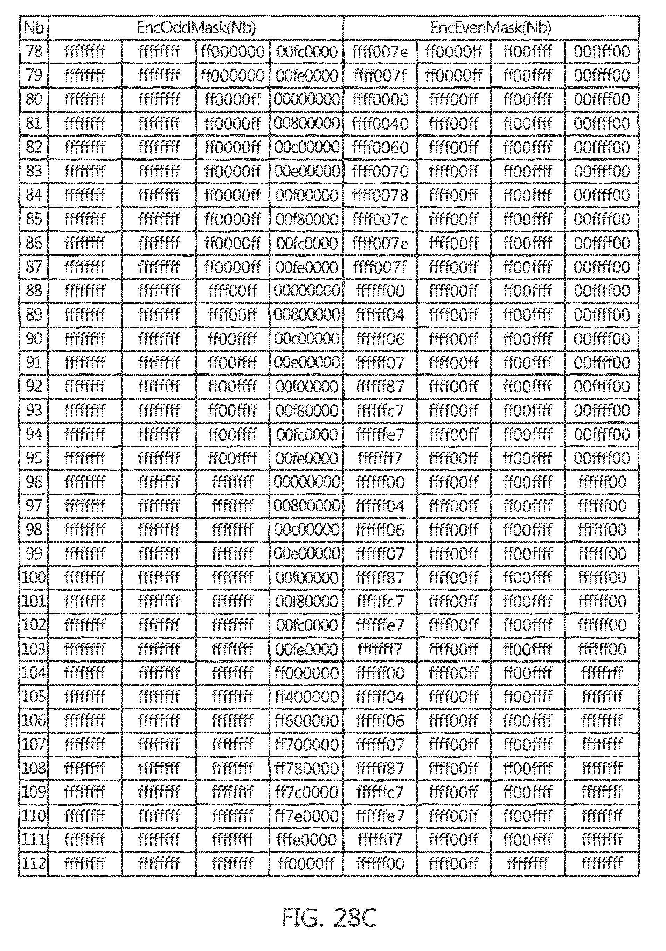

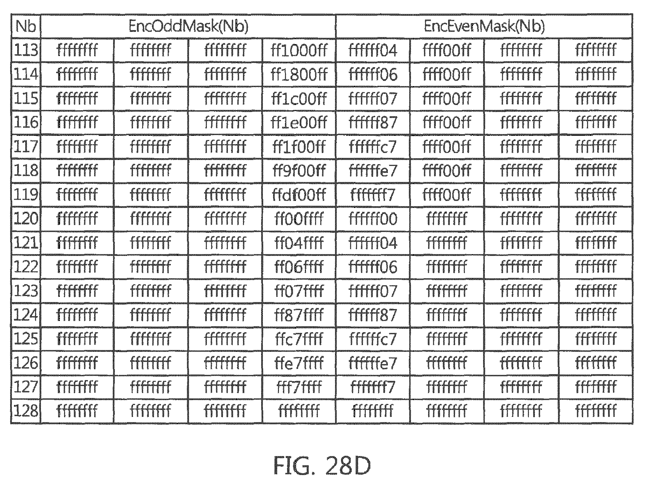

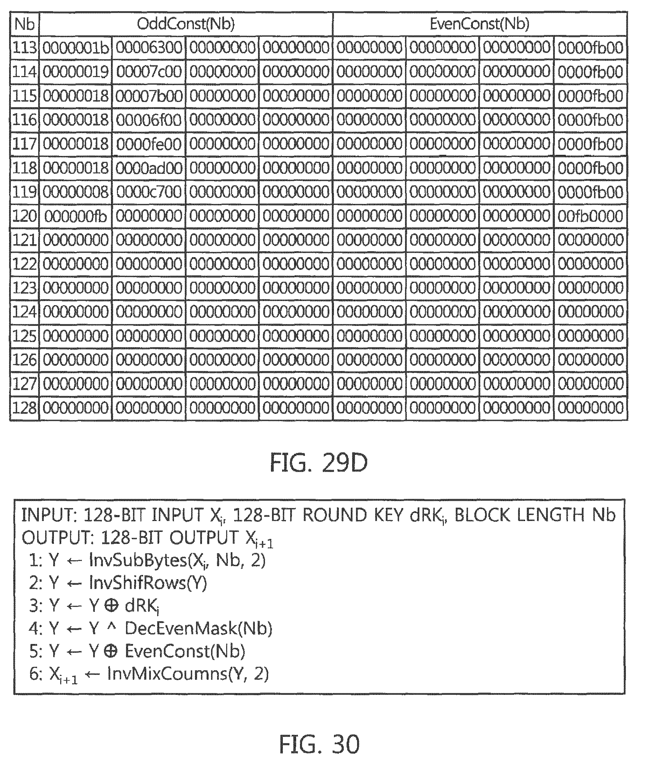

FIGS. 28A to 29D illustrate examples of the DecOddMask(), DecEvenMask(), OddConst() and EvenConst() functions that are used in the algorithms illustrated in FIGS. 27 and 30.

The second even-number decryption round unit 222b inputs the decryption round function value output in the previous round, and decryption round keys $dRK_2$, $dRK_4$, $dRK_6$,..., $dRK_{Nr-2}$ into a Dec_ERound() function, performs the Dec_ERound() function, and outputs a decryption round function value. The Dec_ERound() function is illustrated in FIG.

30.

The third decryption round unit 223 inputs the previous decryption round function value, the last decryption round key $dRK_{Nr}$ and the length Nb of the plaintext into a Dec_FRound() function, performs the Dec_FRound() function, and finally restores the ciphertext C into plaintext P. The Dec_FRound() function is illustrated in FIG. 31.

Meanwhile, the decryption device 200 may further include a secret key generation unit (not illustrated). In this case, the secret key generation unit (not illustrated) may be a secret key generation device 300 illustrated in FIG. 32, which will be described with reference to FIG. 32 in detail.

FIG. 32 is a block diagram of the secret key generation device of the variable-length block cipher apparatus according to an embodiment of the present invention.

Referring to FIG. 32, the secret key generation device 300 may include a message authentication value generation unit 310.

As illustrated in this drawing, the message authentication value generation unit 310 may generate the message authentication values M[0], M[1], M[2],..., M[15] using a master key and a tweak. In this case, the master key may have a length corresponding to any one of 128 bits, 192 bits and 256 bits, and the tweak may have an arbitrary bit length. Furthermore, a message authentication value generated by the message authentication value generation unit 310 may be 128 bits.

When the message authentication value is generated by the message authentication value generation unit 310, the secret key generation device 300 may perform an XOR operation on the upper 128 bits MK[0], MK[1], MK[2],..., MK[15] of the master key and the message authentication value, and may output a secret key K.

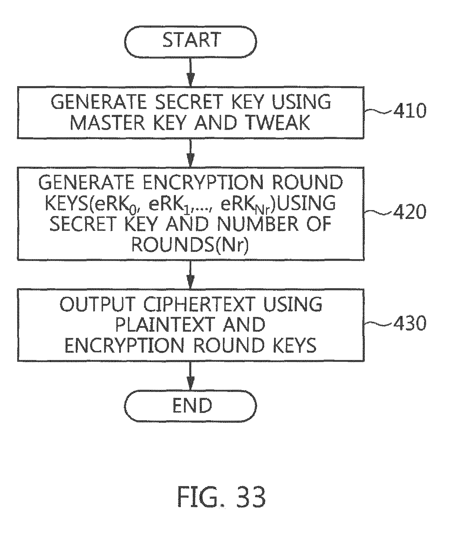

FIG. 33 is a flowchart of an encryption method that is performed by the encryption device of the variable-length block cipher apparatus according to an embodiment of the present invention.

FIG. 33 illustrates an embodiment of an encryption method that is performed by the encryption device 100 of FIG. 1. Since the encryption method that is performed by the encryption device 100 has been described in detail with reference to FIGS. 1 to 21, a brief description thereof will be given below in order to avoid a redundant description.

First, the encryption device 100 generates a secret key using a master key and a tweak, as illustrated in the drawing, or receives a generated secret key from the secret key generation device at step 410.

Thereafter, the encryption key generation unit 110 of the encryption device 100 generates (Nr+1) encryption round keys $eRK_0$, $eRK_1$,..., $eRK_{Nr}$ using the secret key K and the number of rounds Nr at step 420. In this case, the secret key K has a length corresponding to any one of 128 bits, 192 bits and 256 bits, as described above. Furthermore, the number of rounds Nr is set to an appropriate value based on the length Nb of the plaintext P and the length Nk of the secret key in advance by taking into account the security of a variable-length block cipher algorithm.

Thereafter, the ciphertext output unit 120 may output ciphertext C having a length identical to the length Nb of the plaintext P using the plaintext P and the generated encryption round keys eRK at step 430.

The ciphertext output unit 120 may perform the encryption preprocessing function "Enc_PreProc()" using the plaintext P, the first encryption round key $eRK_0$ of the generated (Nr+1) encryption round keys $eRK_0$, $eRK_1$,..., $eRK_{Nr}$, and the length Nb of the plaintext as inputs, may output an initial encryption round function value while taking into account the location of insertion of the plaintext P.

Thereafter, the ciphertext output unit 120 sequentially receives the encryption round function value, output in the previous encryption round, and the encryption round keys $eRK_1$,..., $eRK_{Nr-1}$, and outputs an encryption round function value. In greater detail, in an odd-numbered encryption round, the ciphertext output unit 120 may input the encryption round function value, output in the previous round, and the encryption round keys $eRK_1$, $eRK_3$, $eRK_5$,..., $eRK_{Nr-1}$ into an Enc_ORound() function, may perform the Enc_ORound() function, and may output an encryption round function value. In an even-numbered encryption round, the ciphertext output unit 120 may input the encryption round function value, output in the previous round, and the encryption round keys $eRK_2$, $eRK_4$, $eRK_6$,..., $eRK_{Nr-2}$ into the Enc_ERound() function, may perform the Enc_ERound() function, and may output an encryption round function value.

Thereafter, the ciphertext output unit 120 may input the previous encryption round function value, the last encryption round key $eRK_{Nr}$ and the length Nb of the plaintext into an Enc_FRound() function, may perform the Enc_FRound() function, and may finally output ciphertext C having a length identical to that of the length Nb of the plaintext.

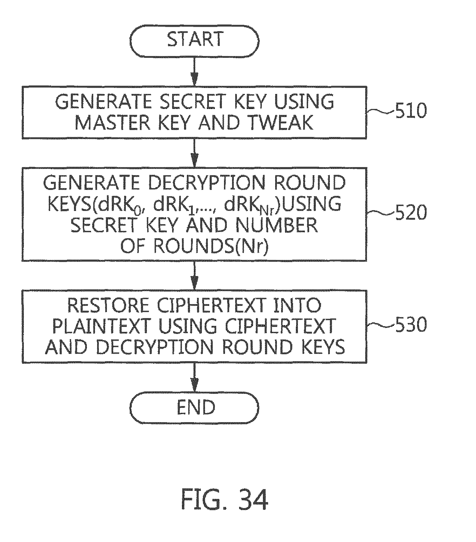

FIG. 34 is a flowchart of an encryption method that is performed by the decryption device of the variable-length block cipher apparatus according to an embodiment of the present invention.

FIG. 34 illustrates an embodiment of a decryption method that is performed by the decryption device 200 of FIG. 22. Since the decryption method that is performed by the decryption device 200 has been described in detail with reference to FIGS. 26 to 31, a brief description thereof will be given below in order to avoid a redundant description.

First, the decryption device 200 generates a secret key using a master key and a tweak, as illustrated in the drawings, or receives a generated secret key from the secret key generation device at step 510.

Thereafter, the decryption key generation unit 210 may generate (Nr+1) decryption round keys $dRK_0$, $dRK_1$,..., $dRK_{Nr-1}$ using the number of rounds Nr appropriately set based on the secret key K, the length Nk of the secret key and the length Nb of the plaintext so that the decryption round keys satisfy the above Equation 1 at step 520. In this case, the decryption key generation unit 210 may generate (Nr+1) decryption round keys $dRK_0$, $dRK_1$,..., $dRK_{Nr-1}$ by performing an algorithm, such as that of Equation 1.

Thereafter, the plaintext restoration unit 220 receives ciphertext C and decryption round keys dRK and restores the ciphertext C into plaintext at step 530.

The plaintext restoration unit 220 may perform the decryption preprocessing function "Dec_PreProc()" using the ciphertext C, the first decryption round key $dRK_0$ and the length Nb of the plaintext as inputs, and may output an initial decryption round function value.

Thereafter, the plaintext restoration unit 220 sequentially receives the decryption round function value, output in the previous decryption round, and decryption round keys $dRK_1$,..., $dRK_{Nr-1}$, and outputs a decryption round function value. In this case, the plaintext restoration unit 220 may repeatedly perform a Dec_ORound() function configured to perform an odd-numbered decryption round and output a decryption round function value and a Dec_ERound() function configured to perform an even-numbered decryption round and output a decryption round function value.

The Dec_ORound() function receives the decryption round function value, output in the previous round, and the decryption round keys $dRK_1$, $dRK_3$, $dRK_5$,..., $dRK_{Nr-1}$, and outputs a decryption round function value. The Dec_ERound() function receives the decryption round function value, output in the previous round, and decryption round keys $dRK_2$, $dRK_4$, $dRK_6$, ..., $dRK_{Nr-2}$, and outputs a decryption round function value.

Thereafter, the plaintext restoration unit 220 inputs the previous decryption round function value, the last decryption round key $dRK_{Nr}$ and the length Nb of the plaintext into a Dec_FRound() function, performs the Dec_FRound() function, and finally restores the ciphertext C into plaintext P.

The variable-length block cipher apparatus and method have the advantage of rapidly converting plaintext having an arbitrary bit length into ciphertext having the same length and rapidly restoring ciphertext into plaintext. As a result, the security of block cipher against attacks can be improved.

Although the preferred embodiments of the present invention have been disclosed for illustrative purposes, those skilled in the art will appreciate that various modifications, additions and substitutions are possible without departing from the scope of the invention as disclosed in the accompanying claims.

According to an exemplary embodiment, a variable-length block cipher apparatus and method capable of format preserving encryption are disclosed. An encryption device for a variable-length block cipher apparatus includes an encryption key generation unit configured to generate encryption round keys $eRKo$, $eRK_1$,..., $eRK_{Nr}$ using a secret key and the number of rounds Nr, and a ciphertext output unit configured to output ciphertext having a length identical to that of plaintext using the plaintext and the encryption round keys. 7. A decryption device for a variable-length block cipher apparatus includes a decryption key generation unit configured to generate decryption round keys $dRK_0$, $dRK_1$,..., $dRK_{Nr}$ using a secret key and a number of rounds Nr, and a plaintext restoration unit configured to restore ciphertext into plaintext having a length identical to that of the ciphertext using the ciphertext and the decryption round keys.

## Claims

1. An encryption device for a variable-length block cipher apparatus, the encryption device comprising:

   an encryption key generation unit configured to generate encryption round keys $eRKo$, $eRK_1$,..., $eRK_{Nr}$ using a secret key and a number of rounds Nr; and
   a ciphertext output unit configured to output ciphertext having a length identical to that of plaintext using the plaintext and the encryption round keys.

2. The encryption device of claim 1, wherein the encryption key generation unit performs a preset function based on a length of the secret key using the secret key and the number of rounds Nr as inputs, outputs $(Nr+1) \times 128$ bit strings, and generates the encryption round keys $eRKo$, $eRK_1$,..., $eRK_{Nr}$ each having a 128-bit length using the output result.

3. The encryption device of claim 1 or 2, wherein the ciphertext output unit comprises:

   a first encryption round unit configured to output an encryption round function value while taking into account a location of insertion of the plaintext by using the plaintext, the length of the plaintext and the encryption round key $eRKo$ as inputs;
   a second encryption round unit configured to receive the encryption round function value, output in the previous encryption round, and current encryption round key, and to output an encryption round function value; and
   a third encryption round unit configured to receive the encryption round function value, output in the previous encryption round, and the encryption round key $eRK_{Nr}$ and the length of the plaintext, and to output the ciphertext.

4. The encryption device of one of claims 1 to 3, further comprising a secret key generation unit configured to generate the secret key having a length identical to that of a master key using the master key and a tweak.

5. The encryption device of claim 4, wherein the secret key generation unit comprises a message authentication unit configured to generate message authentication values M[0], M[1], M[2],..., M[15] using the master key and the tweak, and generates the secret key by performing an XOR operation on predetermined bits of the master key and the generated message authentication values.

6. The encryption device of claim 5, wherein the master key has a bit length corresponding to any one of 128 bits, 192 bits and 256 bits, the tweak has an arbitrary bit length, and the generated message authentication value has a 128-bit length.

7. A decryption device for a variable-length block cipher apparatus, the decryption device comprising:

   a decryption key generation unit configured to generate decryption round keys $dRK_0$, $dRK_1$,..., $dRK_{Nr}$ using a secret key and a number of rounds Nr; and
   a plaintext restoration unit configured to restore ciphertext into plaintext having a length identical to that of the ciphertext using the ciphertext and the decryption round keys.

8. The decryption device of claim 7, wherein the decryption key generation unit generates the decryption round keys so that Decrypt(Encrypt(P, eRK), dRK) = P (where P is the plaintext, eRK is the encryption round keys, and dRK is the decryption round keys) is satisfied.

9. The decryption device of claim 7 or 8, wherein the plaintext restoration unit comprises:

   a first decryption round unit configured to output a decryption round function value while taking into account a location of insertion of the ciphertext by using the ciphertext, the length of the plaintext and the decryption round key $dRK_0$ as inputs;
   a second decryption round unit configured to receive the decryption round function value, output in the previous decryption round, and current decryption round keys, and to output a decryption round function value; and
   a third decryption round unit configured to receive the decryption round function value, output in the previous decryption round, the decryption round key $dRK_{Nr}$ and the length of the plaintext, and to restore the ciphertext into the plaintext.

10. An encryption method for a variable-length block cipher method, the encryption method comprising:

    generating encryption round keys eRKo, $eRK_1$,..., $eRK_{Nr}$ using a secret key and a number of rounds Nr; and
    outputting ciphertext having a length identical to that of plaintext using the plaintext and the encryption round keys.

11. The encryption method of claim 10, wherein generating the encryption round keys $eRK_0$, $eRK_1$,..., $eRK_{Nr}$ comprises:

    performing a preset function based on a length of the secret key using the secret key and the number of rounds Nr as inputs, and then outputting (Nr+1)×128 bit strings; and
    generating the encryption round keys $eRK_0$, $eRK_1$,..., $dRK_{Nr}$ each having a 128-bit length using the output (Nr+1)×128 bit strings.

12. The encryption method of claim 10 or 11, wherein outputting the ciphertext comprises:

    outputting an encryption round function value while taking into account a location of insertion of the plaintext by using the plaintext, the length of the plaintext and the encryption round key eRKo as inputs;
    receiving the encryption round function value, output in the previous encryption round, and current encryption round key, and outputting an encryption round function value; and
    receiving the encryption round function value, output in the previous encryption round, and the encryption round key eRKNr and the length of the plaintext, and outputting the ciphertext.

13. A decryption method for a variable-length block cipher method, the decryption method comprising:

    generating decryption round keys dRK0, dRK1,..., dRKNr using a secret key and a number of rounds Nr; and

restoring ciphertext into plaintext having a length identical to that of the ciphertext using the ciphertext and the decryption round keys.

**14.** The decryption method of claim 13, wherein generating the decryption round keys comprises generating the decryption round keys so that Decrypt(Encrypt(P, eRK), dRK) = P (where P is the plaintext, eRK is the encryption round keys, and dRK is the decryption round keys) is satisfied.

**15.** The decryption method of claim 14, wherein restoring the ciphertext comprises:

outputting a decryption round function value while taking into account a location of insertion of the ciphertext by using the ciphertext, the length of the plaintext and the decryption round key dRK0 as inputs;
receiving the decryption round function value, output in the previous decryption round, and current decryption round keys, and outputting a decryption round function value; and
receiving the decryption round function value, output in the previous decryption round, the decryption round key dRKNr and the length of the plaintext, and restoring the ciphertext into the plaintext.

FIG. 1

| | LENGTH OF PLAINTEXT | | | | |
|---|---|---|---|---|---|
| | 128~120 | 119~48 | 47~24 | 23~16 | 15~8 |
| 128-BIT SECRET KEY | 16 | 20 | 24 | 26 | 34 |
| 192-BIT SECRET KEY | 18 | 22 | 26 | 32 | 46 |
| 256-BIT SECRET KEY | 20 | 24 | 30 | 38 | 58 |

FIG. 2

| ROUND | 128-BIT SECRET KEY | 192-BIT SECRET KEY | 256-BIT SECRET KEY |
|---|---|---|---|
| 0 | 0f68d67a | e58aefdb | 07358c1c |
| 1 | eaff8080 | 98954954 | e5c239a8 |
| 2 | 0320dc2e | 2ddf1b81 | 73847343 |
| 3 | cfa81874 | 698b05c2 | 275dcbb3 |
| 4 | 6f2544dd | ba6d618c | 632aff28 |
| 5 | dde556b7 | eccf8079 | cc10aef2 |
| 6 | acd0b722 | b3fe62a7 | 2ee31b88 |
| 7 | b6ac5280 | 29c89a78 | fe0d9ebf |
| 8 | 1f54d09d | a408f7cd | 307e4beb |
| 9 | 974ea5bb | ccc9a801 | 903c698c |
| 10 | b96ba30a | 943c8e58 | a27a015c |
| 11 | edaef6ca | 912a28ef | 40ba1faa |
| 12 | 5581b333 | 2138c03d | d4b02a34 |
| 13 | 2e6d0cc0 | 12e3eb8d | f053245c |
| 14 | 8251e19a | 1f7c9f94 | 3b16785b |
| 15 | 84e86b2d | 0e96b643 | b9d56bb1 |
| 16 | bd65a858 | 0c918b55 | 61cab693 |
| 17 | f13ac972 | 3d2b90b9 | 47a0b5ec |
| 18 | 4cb0c216 | 23d4fa91 | c5c0eb72 |
| 19 | b72b8e33 | f983e296 | 92975d70 |
| 20 | 5bd719c5 | 105fbb3a | d6816ed8 |
| 21 | 0e64c689 | b8f44fda | 11685d99 |
| 22 | c63ab34b | 7bb46b26 | 06a6d725 |
| 23 | 32c64416 | 69110a4e | 261d6ff6 |
| 24 | 349884ee | 78f539c0 | 71221f8e |
| 25 | 3a8a9d8f | 78417efe | 14187207 |
| 26 | 1e247277 | 87ab2842 | b6663f08 |
| 27 | f6958a33 | 7ffb3209 | 6733ce04 |
| 28 | 11cb2227 | 08aa0395 | ad645d2c |
| 29 | af86a883 | ce6556f2 | 8cde12ad |
| 30 | e2b54694 | cbb8fda5 | 44335caa |

FIG. 3A

14

| ROUND | 128-BIT SECRET KEY | 192-BIT SECRET KEY | 256-BIT SECRET KEY |
|---|---|---|---|
| 31 | 2280e06b | 17c73836 | 3cc18d47 |
| 32 | e00df875 | 2ead4dc6 | e5677a61 |
| 33 | ae1f81ac | f97d5bcc | fd1d556a |
| 34 | 6638da8f | 4604bef5 | e69c687f |
| 35 | 3e9097e7 | 514e7da6 | 77266eb2 |
| 36 | 397f7b2b | 34b873e0 | f23d87ac |
| 37 | ccc9c737 | 014adaea | 9bae2ca2 |
| 38 | d7b8b613 | b416e01a | 01fe4ab7 |
| 39 | b3ab71f1 | cec34084 | 0c9524b8 |
| 40 | 20bb300b | 42fdc0e8 | 1eac15d0 |
| 41 | 903328af | dcffa563 | aa25dd8e |
| 42 | a8895212 | dcffa563 | 31881d7d |
| 43 | 62d98b1a | 6966c91e | 4d0dc715 |
| 44 | 716744b8 | 32d67af0 | 0031d8ff |
| 45 | e297d1a8 | 1afc0b2d | 5dca7f79 |
| 46 | 452c9d2e | 3331c941 | 7801ec66 |
| 47 | 4980676c | dbed5e8f | e346abff |
| 48 | e9159785 | db41b28e | 41f4b60e |
| 49 | c0b955e | a9ad9417 | 3673178c |
| 50 | 6f92ac45 | 9ddb8309 | 0e4719f5 |
| 51 | cc907f40 | 1116avf1 | 65af9014 |
| 52 | e0f3335f | 5f210e60 | 3cd36c4e |
| 53 | 890532a2 | 54bc6eed | 5c4b4bd0 |
| 54 | e038ddab | 675cf9aa | 95603fb7 |
| 55 | e4f9c462 | 5fe9c548 | 7b9811bc |
| 56 | ee12caa8 | d6deba2c | c06ef9df |
| 57 | 3ebe50f2 | 2c231ed9 | 56fb3f0e |
| 58 | fe5fd97b | 317cd7cf | a4c0e960 |
| 59 | 309a686b | f4cb089d | 208d2e1e |
| 60 | 9ca8f911 | 4204d7e4 | 6a898923 |
|  |  |  |  |

FIG. 3B

```
INPUT: NK-BIT INPUT X = (X[0], X[1], . . . , X[Nk/32-1]),
KEY LENGTH NK, NUMBER OF ROUNDS Nr
OUTPUT: (NR+1) X 128-BIT OUTPUTS Y = (Y[0], Y[1], . . . , Y[(NR+1)x4-1])
1: for i = 0 to 31 do
2:    if i < Nk/8 then
3:      Z[i] ← X[i]
4:    else
5:      Z[i] ← 0
6:    end if
7: end for
8: for i = 0 to Nr do
9:    T = Z[0]⊕Z[1]⊕Z[2]⊕Z[5]⊕Z[6]⊕Z[7]⊕RC(Nk, i)
10:   T = G(T)
11:   Z[3] = Z[3]⊕T, Z[4] = Z[4]⊕(T <<< 16)
12:   Z[2] = Z[2]⊕(Z[3] <<< 4), Z[5] = Z[5]⊕(Z[4] <<< 4)
13:   Z[1] = Z[1]⊕(Z[2] <<< 4), Z[6] = Z[6]⊕(Z[5] <<< 4)
14:   Z[0] = Z[0]⊕(Z[1] <<< 4), Z[7] = Z[7]⊕(Z[6] <<< 4)
15:   Z[7] = Z[7]⊕Z[2], Z[6] = Z[6]⊕Z[1], Z[5] = Z[5]⊕Z[0], Z[4] = Z[4]⊕Z[3]
16:   Z[3] = Z[3]⊕Z[5], Z[2] = Z[2]⊕Z[4], Z[1] = Z[1]⊕Z[7], Z[0] = Z[0]⊕Z[6]
17:   Z[7] = Z[7]⊕Z[0], Z[6] = Z[6]⊕Z[3], Z[5] = Z[5]⊕Z[2], Z[4] = Z[4]⊕Z[1]
18:   Z[3] = Z[3]⊕Z[4], Z[2] = Z[2]⊕Z[7], Z[1] = Z[1]⊕Z[6], Z[0] = Z[0]⊕Z[5]
19:   for j = 0 to 3 do
20:     Y [4i+j] ← Z[j]
21:   end for
22: end for
```

FIG. 4

```
INPUT: 32-BIT INPUT X = (X[0], X[1], X[2], X[3]),
OUTPUT: 32-BIT OUTPUT Y = (Y[0], Y[1], Y[2], Y[3])
1: for i = 0 to 4 do
2:    X[i] ← S(X[i])
3: end for
4: Y[0] ← 2 · X[0]+3 · X[1]+1 · X[2]+1 · X[3]
5: Y[1] ← 1 · X[0]+2 · X[1]+3 · X[2]+1 · X[3]
6: Y[2] ← 1 · X[0]+1 · X[1]+2 · X[2]+3 · X[3]
7: Y[3] ← 3 · X[0]+1 · X[1]+1 · X[2]+2 · X[3]
```

FIG. 5

INPUT: Nb-BIT PLAINTEXT P, (Nr+1) 128-BIT ROUND KEYS $eRK_i (0 \leq I \leq Nr)$,
BLOCK LENGTH Nb
OUTPUT: Nb-BIT CIPHERTEXT C
1: $X_1 \leftarrow$ Enc_PreProc(P, $eRK_0$, Nb)
2: for i = 1 to Nr - 1 do
3:   if i is odd then
4:     $X_{i+1} \leftarrow$ Enc_ORound($X_i$, eRK, Nb)
5:   else
6:     $X_{i+1} \leftarrow$ Enc_ERound($X_i$, eRK, Nb)
7:   end if
8: end for
9: C $\leftarrow$ Enc_FRound($X_{Nr}$, $eRK_{Nr}$, Nb)

## FIG. 6

INPUT: Nb-BIT PLAINTEXT P, 128-BIT ROUND KEY $eRK_0$, BLOCK LENGTH Nb
OUTPUT: 128-BIT OUTPUT $X_1$
1: Y $\leftarrow$ SetPosIn(P, Nb, 1)
2: $X_1 \leftarrow$ Y$\oplus eRK_0$

## FIG. 7

```
INPUT: Nb-BIT INPUT X=x₀x₁ ··· x_{Nb-1}, BLOCK LENGTH   Nb, flag t
BLOCK LENGTH: 128-BIT OUTPUT Y=y₀y₁ ··· y₁₂₇
1: IndSet ← φ
2: Y ← 0¹²⁸
3: j ← 0
4: for i = 0 to Nb-r-1 do
5:    IndSet ← IndSet U {i}
6: end for
7: if r ≠ o then
8:    for i = Nb-r to Nb-1 do
9:       if t = 1 then
10:         IndSet ← IndSet U {Nb, i-Nb+r)+120}
11:      else if t = 2 then
12:         IndSet ← IndSet U {EvenDataInPosTable(Nb, i-Nb+r)+120}
13:      end if
14:   end if
15: end if
16: for i = 0 to 127 do
17:    if i ∈ IndSet then
18:       yᵢ ← x_j
19:       j ← j+1
20:    end if
21: end for
```

## FIG. 8

| Nb　　　i | 0 | 1 | 2 | 3 | 4 | 5 | 6 | 7 |
|---|---|---|---|---|---|---|---|---|
| 121 ~ 128 | 5 | 6 | 7 | 0 | 1 | 2 | 3 | 4 |
| 113 ~ 120 | 3 | 4 | 5 | 6 | 7 | 0 | 1 | 2 |
| 105 ~ 112 | 1 | 2 | 3 | 4 | 5 | 6 | 0 | 7 |
| 9 ~ 104 | 0 | 1 | 2 | 3 | 4 | 5 | 6 | 7 |

## FIG. 9

INPUT: 128-BIT INPUT $X_i$, 128-BIT ROUND KEY $eRK_i$, BLOCK LENGTH Nb
OUTPUT: 128-BIT OUTPUT $X_{i+1}$
 1: $Y \leftarrow X_i$ ^ EncEvenMask(Nb)
 2: $Y \leftarrow$ ShiftRows(Y)
 3: $Y \leftarrow$ SubBytes(Y, Nb, 1)
 4: $Y \leftarrow$ MixColumns(Y)
 5: $X_{i+1} \leftarrow Y \oplus eRK_i$

FIG. 10

| Nb | EncOddMask(Nb) | | | | EncEvenMask(Nb) | | | |
|---|---|---|---|---|---|---|---|---|
| 8 | ff000000 | 00000000 | 00000000 | 00000000 | ff000000 | 00000000 | 00000000 | 00000000 |
| 9 | ff000000 | 00000000 | 00000000 | 00000080 | ff800000 | 00000000 | 00000000 | 00000000 |
| 10 | ff000000 | 00000000 | 00000000 | 000000c0 | ffc00000 | 00000000 | 00000000 | 00000000 |
| 11 | ff000000 | 00000000 | 00000000 | 000000e0 | ffe00000 | 00000000 | 00000000 | 00000000 |
| 12 | ff000000 | 00000000 | 00000000 | 000000f0 | fff00000 | 00000000 | 00000000 | 00000000 |
| 13 | ff000000 | 00000000 | 00000000 | 000000f8 | fff80000 | 00000000 | 00000000 | 00000000 |
| 14 | ff000000 | 00000000 | 00000000 | 000000fc | fffc0000 | 00000000 | 00000000 | 00000000 |
| 15 | ff000000 | 00000000 | 00000000 | 000000fe | fffe0000 | 00000000 | 00000000 | 00000000 |
| 16 | ffff0000 | 00000000 | 00000000 | 00000000 | ff000000 | 00000000 | 00000000 | 000000ff |
| 17 | ffff0000 | 00000000 | 00000000 | 00000080 | ff800000 | 00000000 | 00000000 | 000000ff |
| 18 | ffff0000 | 00000000 | 00000000 | 000000c0 | ffc00000 | 00000000 | 00000000 | 000000ff |
| 19 | ffff0000 | 00000000 | 00000000 | 000000e0 | ffe00000 | 00000000 | 00000000 | 000000ff |
| 20 | ffff0000 | 00000000 | 00000000 | 000000f0 | fff00000 | 00000000 | 00000000 | 000000ff |
| 21 | ffff0000 | 00000000 | 00000000 | 000000f8 | fff80000 | 00000000 | 00000000 | 000000ff |
| 22 | ffff0000 | 00000000 | 00000000 | 000000fc | fffc0000 | 00000000 | 00000000 | 000000ff |
| 23 | ffff0000 | 00000000 | 00000000 | 000000fe | fffe0000 | 00000000 | 00000000 | 000000ff |
| 24 | ffffff00 | 00000000 | 00000000 | 00000000 | ff000000 | 00000000 | 0000ff00 | 000000ff |
| 25 | ffffff00 | 00000000 | 00000000 | 00000080 | ff800000 | 00000000 | 0000ff00 | 000000ff |
| 26 | ffffff00 | 00000000 | 00000000 | 000000c0 | ffc00000 | 00000000 | 0000ff00 | 000000ff |
| 27 | ffffff00 | 00000000 | 00000000 | 000000e0 | ffe00000 | 00000000 | 0000ff00 | 000000ff |
| 28 | ffffff00 | 00000000 | 00000000 | 000000f0 | fff00000 | 00000000 | 0000ff00 | 000000ff |
| 29 | ffffff00 | 00000000 | 00000000 | 000000f8 | fff80000 | 00000000 | 0000ff00 | 000000ff |
| 30 | ffffff00 | 00000000 | 00000000 | 000000fc | fffc0000 | 00000000 | 0000ff00 | 000000ff |
| 31 | ffffff00 | 00000000 | 00000000 | 000000fe | fffe0000 | 00000000 | 0000ff00 | 000000ff |
| 32 | ffffffff | 00000000 | 00000000 | 00000000 | ff000000 | 00ff0000 | 0000ff00 | 000000ff |
| 33 | ffffffff | 00000000 | 00000000 | 00000080 | ff800000 | 00ff0000 | 0000ff00 | 000000ff |
| 34 | ffffffff | 00000000 | 00000000 | 000000c0 | ffc00000 | 00ff0000 | 0000ff00 | 000000ff |
| 35 | ffffffff | 00000000 | 00000000 | 000000e0 | ffe00000 | 00ff0000 | 0000ff00 | 000000ff |
| 36 | ffffffff | 00000000 | 00000000 | 000000f0 | fff00000 | 00ff0000 | 0000ff00 | 000000ff |
| 37 | ffffffff | 00000000 | 00000000 | 000000f8 | fff80000 | 00ff0000 | 0000ff00 | 000000ff |
| 38 | ffffffff | 00000000 | 00000000 | 000000fc | fffc0000 | 00ff0000 | 0000ff00 | 000000ff |
| 39 | ffffffff | 00000000 | 00000000 | 000000fe | fffe0000 | 00ff0000 | 0000ff00 | 000000ff |
| 40 | ffffffff | ff000000 | 00000000 | 00000000 | ff000000 | ffff0000 | 0000ff00 | 000000ff |
| 41 | ffffffff | ff000000 | 00000000 | 00000080 | ff800000 | ffff0000 | 0000ff00 | 000000ff |
| 42 | ffffffff | ff000000 | 00000000 | 000000c0 | ffc00000 | ffff0000 | 0000ff00 | 000000ff |

FIG. 11A

| Nb | EncOddMask(Nb) | | | | EncEvenMask(Nb) | | | |
|----|----------|----------|----------|----------|----------|----------|----------|----------|
| 43 | ffffffff | ff000000 | 00000000 | 000000e0 | ffe00000 | ffff0000 | 0000ff00 | 000000ff |
| 44 | ffffffff | ff000000 | 00000000 | 000000f0 | fff00000 | ffff0000 | 0000ff00 | 000000ff |
| 45 | ffffffff | ff000000 | 00000000 | 000000f8 | fff80000 | ffff0000 | 0000ff00 | 000000ff |
| 46 | ffffffff | ff000000 | 00000000 | 000000fc | fffc0000 | ffff0000 | 0000ff00 | 000000ff |
| 47 | ffffffff | ff000000 | 00000000 | 000000fe | fffe0000 | ffff0000 | 0000ff00 | 000000ff |
| 48 | ffffffff | ffff0000 | 00000000 | 00000000 | ff0000ff | ffff0000 | 0000ff00 | 000000ff |
| 49 | ffffffff | ffff0000 | 00000000 | 00000080 | ff8000ff | ffff0000 | 0000ff00 | 000000ff |
| 50 | ffffffff | ffff0000 | 00000000 | 000000c0 | ffc000ff | ffff0000 | 0000ff00 | 000000ff |
| 51 | ffffffff | ffff0000 | 00000000 | 000000e0 | ffe000ff | ffff0000 | 0000ff00 | 000000ff |
| 52 | ffffffff | ffff0000 | 00000000 | 000000f0 | fff000ff | ffff0000 | 0000ff00 | 000000ff |
| 53 | ffffffff | ffff0000 | 00000000 | 000000f8 | fff800ff | ffff0000 | 0000ff00 | 000000ff |
| 54 | ffffffff | ffff0000 | 00000000 | 000000fc | fffc00ff | ffff0000 | 0000ff00 | 000000ff |
| 55 | ffffffff | ffff0000 | 00000000 | 000000fe | fffe00ff | ffff0000 | 0000ff00 | 000000ff |
| 56 | ffffffff | ffffff00 | 00000000 | 00000000 | ff0000ff | ffff0000 | 0000ff00 | 0000ffff |
| 57 | ffffffff | ffffff00 | 00000000 | 00000080 | ff8000ff | ffff0000 | 0000ff00 | 0000ffff |
| 58 | ffffffff | ffffff00 | 00000000 | 000000c0 | ffc000ff | ffff0000 | 0000ff00 | 0000ffff |
| 59 | ffffffff | ffffff00 | 00000000 | 000000e0 | ffe000ff | ffff0000 | 0000ff00 | 0000ffff |
| 60 | ffffffff | ffffff00 | 00000000 | 000000f0 | fff000ff | ffff0000 | 0000ff00 | 0000ffff |
| 61 | ffffffff | ffffff00 | 00000000 | 000000f8 | fff800ff | ffff0000 | 0000ff00 | 0000ffff |
| 62 | ffffffff | ffffff00 | 00000000 | 000000fc | fffc00ff | ffff0000 | 0000ff00 | 0000ffff |
| 63 | ffffffff | ffffff00 | 00000000 | 000000fe | fffe00ff | ffff0000 | 0000ff00 | 0000ffff |
| 64 | ffffffff | ffffffff | 00000000 | 00000000 | ff0000ff | ffff0000 | 00ffff00 | 0000ffff |
| 65 | ffffffff | ffffffff | 00000000 | 00000080 | ff8000ff | ffff0000 | 00ffff00 | 0000ffff |
| 66 | ffffffff | ffffffff | 00000000 | 000000c0 | ffc000ff | ffff0000 | 00ffff00 | 0000ffff |
| 67 | ffffffff | ffffffff | 00000000 | 000000e0 | ffe000ff | ffff0000 | 00ffff00 | 0000ffff |
| 68 | ffffffff | ffffffff | 00000000 | 000000f0 | fff000ff | ffff0000 | 00ffff00 | 0000ffff |
| 69 | ffffffff | ffffffff | 00000000 | 000000f8 | fff800ff | ffff0000 | 00ffff00 | 0000ffff |
| 70 | ffffffff | ffffffff | 00000000 | 000000fc | fffc00ff | ffff0000 | 00ffff00 | 0000ffff |
| 71 | ffffffff | ffffffff | 00000000 | 000000fe | fffe00ff | ffff0000 | 00ffff00 | 0000ffff |
| 72 | ffffffff | ffffffff | ff000000 | 00000000 | ff0000ff | ffff0000 | ffffff00 | 0000ffff |
| 73 | ffffffff | ffffffff | ff000000 | 00000080 | ff8000ff | ffff0000 | ffffff00 | 0000ffff |
| 74 | ffffffff | ffffffff | ff000000 | 000000c0 | ffc000ff | ffff0000 | ffffff00 | 0000ffff |
| 75 | ffffffff | ffffffff | ff000000 | 000000e0 | ffe000ff | ffff0000 | ffffff00 | 0000ffff |
| 76 | ffffffff | ffffffff | ff000000 | 000000f0 | fff000ff | ffff0000 | ffffff00 | 0000ffff |
| 77 | ffffffff | ffffffff | ff000000 | 000000f8 | fff800ff | ffff0000 | ffffff00 | 0000ffff |

FIG. 11B

| Nb | EncOddMask(Nb) | | | | EncEvenMask(Nb) | | | |
|---|---|---|---|---|---|---|---|---|
| 78 | ffffffff | ffffffff | ff000000 | 000000fc | fffc00ff | ffff0000 | ffffff00 | 0000ffff |
| 79 | ffffffff | ffffffff | ff000000 | 000000fe | fffe00ff | ffff0000 | ffffff00 | 0000ffff |
| 80 | ffffffff | ffffffff | ffff0000 | 00000000 | ff0000ff | ffff00ff | ffffff00 | 0000ffff |
| 81 | ffffffff | ffffffff | ffff0000 | 00000080 | ff8000ff | ffff00ff | ffffff00 | 0000ffff |
| 82 | ffffffff | ffffffff | ffff0000 | 000000c0 | ffc000ff | ffff00ff | ffffff00 | 0000ffff |
| 83 | ffffffff | ffffffff | ffff0000 | 000000e0 | ffe000ff | ffff00ff | ffffff00 | 0000ffff |
| 84 | ffffffff | ffffffff | ffff0000 | 000000f0 | fff000ff | ffff00ff | ffffff00 | 0000ffff |
| 85 | ffffffff | ffffffff | ffff0000 | 000000f8 | fff800ff | ffff00ff | ffffff00 | 0000ffff |
| 86 | ffffffff | ffffffff | ffff0000 | 000000fc | fffc00ff | ffff00ff | ffffff00 | 0000ffff |
| 87 | ffffffff | ffffffff | ffff0000 | 000000fe | fffe00ff | ffff00ff | ffffff00 | 0000ffff |
| 88 | ffffffff | ffffffff | ffffff00 | 00000000 | ff00ffff | ffff00ff | ffffff00 | 0000ffff |
| 89 | ffffffff | ffffffff | ffffff00 | 00000080 | ff80ffff | ffff00ff | ffffff00 | 0000ffff |
| 90 | ffffffff | ffffffff | ffffff00 | 000000c0 | ffc0ffff | ffff00ff | ffffff00 | 0000ffff |
| 91 | ffffffff | ffffffff | ffffff00 | 000000e0 | ffe0ffff | ffff00ff | ffffff00 | 0000ffff |
| 92 | ffffffff | ffffffff | ffffff00 | 000000f0 | fff0ffff | ffff00ff | ffffff00 | 0000ffff |
| 93 | ffffffff | ffffffff | ffffff00 | 000000f8 | fff8ffff | ffff00ff | ffffff00 | 0000ffff |
| 94 | ffffffff | ffffffff | ffffff00 | 000000fc | fffcffff | ffff00ff | ffffff00 | 0000ffff |
| 95 | ffffffff | ffffffff | ffffff00 | 000000fe | fffeffff | ffff00ff | ffffff00 | 0000ffff |
| 96 | ffffffff | ffffffff | ffffffff | 00000000 | ff00ffff | ffff00ff | ffffff00 | ffffff00 |
| 97 | ffffffff | ffffffff | ffffffff | 00000080 | ff80ffff | ffff00ff | ffffff00 | ffffff00 |
| 98 | ffffffff | ffffffff | ffffffff | 000000c0 | ffc0ffff | ffff00ff | ffffff00 | ffffff00 |
| 99 | ffffffff | ffffffff | ffffffff | 000000e0 | ffe0ffff | ffff00ff | ffffff00 | ffffff00 |
| 100 | ffffffff | ffffffff | ffffffff | 000000f0 | fff0ffff | ffff00ff | ffffff00 | ffffff00 |
| 101 | ffffffff | ffffffff | ffffffff | 000000f8 | fff8ffff | ffff00ff | ffffff00 | ffffff00 |
| 102 | ffffffff | ffffffff | ffffffff | 000000fc | fffcffff | ffff00ff | ffffff00 | ffffff00 |
| 103 | ffffffff | ffffffff | ffffffff | 000000fe | fffeffff | ffff00ff | ffffff00 | ffffff00 |
| 104 | ffffffff | ffffffff | ffffffff | ff000000 | ff00ffff | ffff00ff | ffffff00 | ffffffff |
| 105 | ffffffff | ffffffff | ffffffff | ff000080 | ff80ffff | ffff00ff | ffffff00 | ffffffff |
| 106 | ffffffff | ffffffff | ffffffff | ff0000c0 | ffc0ffff | ffff00ff | ffffff00 | ffffffff |
| 107 | ffffffff | ffffffff | ffffffff | ff0000e0 | ffe0ffff | ffff00ff | ffffff00 | ffffffff |
| 108 | ffffffff | ffffffff | ffffffff | ff0000f0 | fff0ffff | ffff00ff | ffffff00 | ffffffff |
| 109 | ffffffff | ffffffff | ffffffff | ff0000f8 | fff8ffff | ffff00ff | ffffff00 | ffffffff |
| 110 | ffffffff | ffffffff | ffffffff | ff0000fc | fffcffff | ffff00ff | ffffff00 | ffffffff |
| 111 | ffffffff | ffffffff | ffffffff | 000000fe | fffeffff | ffff00ff | ffffffff | ffffffff |
| 112 | ffffffff | ffffffff | ffffffff | ffff0000 | ff00ffff | ffff00ff | ffffffff | ffffffff |

FIG. 11C

22

| Nb | EncOddMask(Nb) | | | | EncEvenMask(Nb) | | | |
|---|---|---|---|---|---|---|---|---|
| 113 | ffffffff | ffffffff | ffffffff | ffff0080 | ff80ffff | ffff00ff | ffffffff | ffffffff |
| 114 | ffffffff | ffffffff | ffffffff | ffff00c0 | ffc0ffff | ffff00ff | ffffffff | ffffffff |
| 115 | ffffffff | ffffffff | ffffffff | ffff00e0 | ffe0ffff | ffff00ff | ffffffff | ffffffff |
| 116 | ffffffff | ffffffff | ffffffff | ffff00f0 | fff0ffff | ffff00ff | ffffffff | ffffffff |
| 117 | ffffffff | ffffffff | ffffffff | ffff00f8 | fff8ffff | ffff00ff | ffffffff | ffffffff |
| 118 | ffffffff | ffffffff | ffffffff | ffff00fc | fffcffff | ffff00ff | ffffffff | ffffffff |
| 119 | ffffffff | ffffffff | ffffffff | ffff00fe | fffeffff | ffff00ff | ffffffff | ffffffff |
| 120 | ffffffff | ffffffff | ffffffff | ffffff00 | ff00ffff | ffffffff | ffffffff | ffffffff |
| 121 | ffffffff | ffffffff | ffffffff | ffffff80 | ff80ffff | ffffffff | ffffffff | ffffffff |
| 122 | ffffffff | ffffffff | ffffffff | ffffffc0 | ffc0ffff | ffffffff | ffffffff | ffffffff |
| 123 | ffffffff | ffffffff | ffffffff | ffffffe0 | ffe0ffff | ffffffff | ffffffff | ffffffff |
| 124 | ffffffff | ffffffff | ffffffff | fffffff0 | fff0ffff | ffffffff | ffffffff | ffffffff |
| 125 | ffffffff | ffffffff | ffffffff | fffffff8 | fff8ffff | ffffffff | ffffffff | ffffffff |
| 126 | ffffffff | ffffffff | ffffffff | fffffffc | fffcffff | ffffffff | ffffffff | ffffffff |
| 127 | ffffffff | ffffffff | ffffffff | fffffffe | fffeffff | ffffffff | ffffffff | ffffffff |
| 128 | ffffffff | ffffffff | ffffffff | ffffffff | ffffffff | ffffffff | ffffffff | ffffffff |

FIG. 11D

```
INPUT: 128-BIT INPUT X=X[0], X[1], ..., X[15]
OUTPUT: 128-BIT OUTPUT Y=Y[0], Y[1], ..., Y[15]
 1: for i = 0 to 15 do
 2:    Y[i] ← X[ShiftRowsTable(i)]
 3: end for
```

FIG. 12

| i | 0 | 1 | 2 | 3 | 4 | 5 | 6 | 7 | 8 | 9 | 10 | 11 | 12 | 13 | 14 | 15 |
|---|---|---|---|---|---|---|---|---|---|---|----|----|----|----|----|----|
| J | 0 | 5 | 10 | 15 | 4 | 9 | 14 | 3 | 8 | 13 | 2 | 7 | 12 | 1 | 6 | 11 |

## FIG. 13

```
INPUT: 128-BIT INPUT X=X[0], X[1], ..., X[15], BLOCK LENGTH Nb, flag t
OUTPUT: 128-BIT OUTPUT Y=Y[0], Y[1], ..., Y[15]
 1: for i = 0 to 15 do
 2:    Y[i] ← S(X[i])
 3: end for
 4: if 8 ∤ Nb and t = 1 then
 5:    Y[3] ← SP(X[3], Nb, 1)
 6: else if 8 ∤ Nb and t = 2 then
 7:    Y[13] ← SP(X[13], Nb, 2)
 8: end if
```

## FIG. 14

| | 0 | 1 | 2 | 3 | 4 | 5 | 6 | 7 | 8 | 9 | a | b | c | d | e | f |
|----|----|----|----|----|----|----|----|----|----|----|----|----|----|----|----|----|
| 00 | 63 | 7c | 77 | 7b | f2 | 6b | 6f | c5 | 30 | 01 | 67 | 2b | fe | d7 | ab | 76 |
| 10 | ca | 82 | c9 | 7d | fa | 59 | 47 | f0 | ad | d4 | a2 | af | 9c | a4 | 72 | c0 |
| 20 | b7 | fd | 93 | 26 | 36 | 3f | f7 | cc | 34 | a5 | e5 | f1 | 71 | d8 | 31 | 15 |
| 30 | 04 | c7 | 23 | c3 | 18 | 96 | 05 | 9a | 07 | 12 | 80 | e2 | eb | 27 | b2 | 75 |
| 40 | 09 | 83 | 2c | 1a | 1b | 6e | 5a | a0 | 52 | 3b | d6 | b3 | 29 | e3 | 2f | 84 |
| 50 | 53 | d1 | 00 | ed | 20 | fc | b1 | 5b | 6a | cb | be | 39 | 4a | 4c | 58 | cf |
| 60 | d0 | ef | aa | fb | 43 | 4d | 33 | 85 | 45 | f9 | 02 | 7f | 50 | 3c | 9f | a8 |
| 70 | 51 | a3 | 40 | 8f | 92 | 9d | 38 | f5 | bc | b6 | da | 21 | 10 | ff | f3 | d2 |
| 80 | cd | 0c | 13 | ec | 5f | 97 | 44 | 17 | c4 | a7 | 7e | 3d | 64 | 5d | 19 | 73 |
| 90 | 60 | 81 | 4f | dc | 22 | 2a | 90 | 88 | 46 | ee | b8 | 14 | de | 5e | 0b | db |
| a0 | e0 | 32 | 3a | 0a | 49 | 06 | 24 | 5c | c2 | d3 | ac | 62 | 91 | 95 | e4 | 79 |
| b0 | e7 | c8 | 37 | 6d | 8d | d5 | 4e | a9 | 6c | 54 | f4 | ea | 65 | 7a | ae | 08 |
| c0 | ba | 78 | 25 | 2e | 1c | a6 | b4 | c6 | e8 | dd | 74 | 1f | 4b | bd | 8b | 8a |
| d0 | 70 | 3e | b5 | 66 | 48 | 03 | f6 | 0e | 61 | 35 | 57 | b9 | 86 | c1 | 1d | 9e |
| e0 | e1 | f8 | 98 | 11 | 69 | d9 | 8e | 94 | 9b | 1e | 87 | e9 | ce | 55 | 28 | df |
| f0 | 8c | a1 | 89 | 0d | bf | e6 | 42 | 68 | 41 | 99 | 2d | 0f | b0 | 54 | bb | 16 |

FIG. 15

```
INPUT: 8-BIT INPUT X, BLOCK LENGTH Nb, flag t
OUTPUT: 8-BIT OUTPUT Y
 1: if t = 1 then
 2:   if 11 ≤ Nb/8 < 16 then
 3:     Y = ((X >> 5) ∧ 0x07)⊕((X <<3) ∧ 0xf8)
 4:   else if 6 ≤ Nb/8 < 11 then
 5:     Y = ((X >> 1) ∧ 0x07f)⊕((X << 7) ∧ 0x80)
 6:   else if 1 ≤ Nb/8 < 6 then
 7:     Y = X
 8:   end if
 9: else if t = 2 then
10:   if 15 ≤ Nb/8 < 16 then
11:     Y = ((X >> 5) ∧ 0x07)⊕((X << 3) ∧ 0xf8)
12:   else if 14 ≤ Nb/8 < 15 then
13:     Y = ((X >> 3) ∧ 0x1f)⊕((X << 5) ∧ 0xe0)
14:   else if 13 ≤ Nb/8 < 14 then
15:     Y = ((X >> 1) ∧ 0x7e)⊕((X << 6) ∧ 0x80)⊕(X ∧ 0x01)
16:   else if 1 ≤ Nb/8 < 13 then
17:     Y = X
18:   end if
19: end if
```

# FIG. 16

```
INPUT: 128-BIT INPUT X = (X[0], X[1],..., X[15])
OUTPUT: 128-BIT OUTPUT Y = (Y[0], Y[1],..., Y[15])
 1: for i = 0 to 3 do
 2:   Y[4i]     ← 2 · X[4i]+3 · X[4i+1]+1 · X[4i+2]+1 · X[4i+3]
 3:   Y[4i+1] ← 1 · X[4i]+2 · X[4i+1]+3 · X[4i+2]+1 · X[4i+3]
 4:   Y[4i+2] ← 1 · X[4i]+1 · X[4i+1]+2 · X[4i+2]+3 · X[4i+3]
 5:   Y[4i+3] ← 3 · X[4i]+1 · X[4i+1]+1 · X[4i+2]+2 · X[4i+3]
 6: end for
```

# FIG. 17

INPUT: 128-BIT INPUT X$_i$, 128-BIT ROUND KEY eRK$_i$, BLOCK LENGTH Nb
OUTPUT: 128-BIT OUTPUT X$_{i+1}$
1: Y ← X$_i$ ^ EncEvenMask(Nb)
2: Y ← ShiftRows(Y)
3: Y ← SubBytes(Y, Nb, 2)
4: Y ← MixColumns(Y)
5: X$_{i+1}$ ← Y⊕eRK$_i$

# FIG. 18

INPUT: 128-BIT INPUT X$_{Nr}$, 128-BIT ROUND KEY eRK$_{Nr}$, BLOCK LENGTH Nb
OUTPUT: Nb-BIT CIPHERTEXT C
1: Y ← ShiftRows(X$_{Nr}$)
2: Y ← SubBytes(Y, Nb, 2)
3: Y ← Y⊕eRK$_{Nr}$
4: Y ← SwapBytes(Y)
5: C ← SetPosOut(Y, Nb, 1)

# FIG. 19

INPUT: 128-BIT INPUT X = X[0], X[1],..., X[15]
OUTPUT: 128-BIT OUTPUT Y = Y[0], Y[1],..., Y[15]
1: for i = 0 to 3 do
2:    Y[4i + 0] ← X[4i + 0]
3:    Y[4i + 1] ← X[4i + 3]
4:    Y[4i + 2] ← X[4i + 2]
5:    Y[4i + 3] ← X[4i + 1]
6: end for

# FIG. 20

INPUT: 128-BIT INPUT X = $X_0X_1...X_{127}$, BLOCK LENGTH Nb, flag t
OUTPUT: Nb-BIT OUTPUT Y = $y_0y_1...y_{NB-1}$
 1: IndSet ← φ
 2: Y ← $0^{Nb}$
 3: j ← 0
 4: for i = 0 to Nb - r - 1 do
 5:   IndSet ← IndSet ∪ {I}
 6: end for
 7: if r ≠ 0 then
 8:   for i = Nb - r to Nb - 1 do
 9:     if t = 1 then
10:       IndSet ← Indset ∪{EvenDataInPosTable(Nb,i - Nb+r)=120}
11:     else if t = 2 then
12:       IndSet ← Indset ∪{i - Nb + r + 120}
13:     end if
14:   end for
15: end if
16: for i = o to 127 do
17:   if i ∈ IndSet then
18:     $y_j$ ← $x_i$
19:     j ← j + 1
20:   end if
21: end for

FIG. 21

200

220

SECRET KEY

CIPHERTEXT

$X_0$

$dRK_0$

FIRST DECRYPTION
ROUND UNIT
~221

$X_1$

$dRK_1$

SECOND ODD-NUMBER
DECRYPTION ROUND UNIT
~222a

$X_2$

$dRK_2$

SECOND EVEN-NUMBER
DECRYPTION ROUND UNIT
~222b

~222

$X_3$

210 ~

DECRYPTION
KEY
GENERATION
UNIT

$X_{Nr-1}$

$dRK_{Nr-1}$

SECOND ODD-NUMBER
DECRYPTION ROUND UNIT
~222a

$X_{Nr}$

$dRK_{Nr}$

THIRD DECRYPTION
ROUND UNIT
~223

$X_{Nr+1}$

PLAINTEXT

FIG. 22

INPUT: Nk-BIT INPUT K = K[0], K[1],..., K[Nk/8-1], KEY LENGTH Nk,
NUMBER OF ROUNDS Nr, BLOCK LENGTH Nb
OUTPUT: (Nr+1) 128-BIT ROUND KEYS $dRK_i$ = $dRK_i$[0], $dRK_i$[1],..., $dRK_i$[15],
$0 \le i \le Nr$
1: Y= KeySchedule(K, Nk, Nr)
2: for i = 0 to Nr do
3:    for j = 1 to 16 do
4:        $dRK_{Nr-i}$[j] ← Y[16i+j]
5:    end for
6: end for
7: for i = 1 to Nr - 1 do
8:    if i is odd then
9:        X = $dRK_i$ ∧EnEvenMask(Nb)
10:        $dRK_i$ = InvMixColumns(X, 1)
11:    else
12:        X = $dRK_i$ ∧EnEvenMask(Nb)
13:        $dRK_i$ = InvMixColumns(X, 2)
14:    end if
15: end for

FIG. 23

INPUT: 128-BIT INPUT X=$x_0 x_1 ... x_{127}$, flag t
OUTPUT: 128-BIT OUTPUT Y=$y_0 y_1 ... y_{127}$
1: for k = 0 to 3 do
2:    for i = 1 to 31 do
3:    temp ← 0;
4:    for j = 0 to 31 do
5:        temp ← temp+$M_{i,j}^{\nabla(t-1)+k}$ · $x_{32k+j}$
6:    end for
7:    $y_{32k+i}$ ← temp
8:  end for
9: end for

FIG. 24

```
INPUT: Nb-BIT CIPHERTEXT C, (Nr+1) 128-BIT ROUND KEYS dRK_i(0≤i≤Nr),
BLOCK LENGTH Nb
OUTPUT: Nb-BIT PLAIN TEXT P
 1: X_1 ← Dec_PreProc(C, dRK_0, Nb)
 2: for i = 1 to Nr - 1 do
 3:    if i is odd then
 4:       X_{i+1}← Dec_ORound(X_i, dRK_i, Nb)
 5:    else
 6:       X_{i+1} ← Dec_ERound(X_i, dRK_i, Nb)
 7:    end if
 8: end for
 9: P ← Dec_FRound(X_{Nr}, dRK_{Nr}, Nb)
```

## FIG. 25

```
INPUT: Nb-BIT CIPHERTEXT C, 128-BIT ROUND KEY dRK_0, BLOCK LENGTH Nb
OUTPUT: 128-BIT OUTPUT X_1
 1: Y ← SetPosIn(C, Nb, 2)
 2: Y ← SwapBytes(Y)
 3: Y ← Y⊕dRK_0
```

## FIG. 26

```
INPUT: 128-BIT INPUT X_i, 128-BIT ROUND KEY dRK_i, BLOCK LENGTH Nb
OUTPUT: 128-BIT OUTPUT X_{i+1}
 1: Y ← InvSubBytes(X_{Nr}, Nb, 1)
 2: Y ← InvShifRows(Y)
 3: Y ← Y⊕dRK_i
 4: Y ← Y ^ DecOddMask(Nb)
 5: Y ← Y⊕OddConst(Nb)
 6: X_{i+1} ← InvMixCoumns(Y, 1)
```

## FIG. 27

| Nb | DecOddMask(Nb) | | | | DecEvenMask(Nb) | | | |
|---|---|---|---|---|---|---|---|---|
| 8 | ff000000 | 00000000 | 00000000 | 00000000 | ff000000 | 00000000 | 00000000 | 00000000 |
| 9 | ff000000 | 00000000 | 00000000 | 00800000 | ff000080 | 00000000 | 00000000 | 00000000 |
| 10 | ff000000 | 00000000 | 00000000 | 00c00000 | ff0000c0 | 00000000 | 00000000 | 00000000 |
| 11 | ff000000 | 00000000 | 00000000 | 00e00000 | ff0000e0 | 00000000 | 00000000 | 00000000 |
| 12 | ff000000 | 00000000 | 00000000 | 00f00000 | ff0000f0 | 00000000 | 00000000 | 00000000 |
| 13 | ff000000 | 00000000 | 00000000 | 00f80000 | ff0000f8 | 00000000 | 00000000 | 00000000 |
| 14 | ff000000 | 00000000 | 00000000 | 00fc0000 | ff0000fc | 00000000 | 00000000 | 00000000 |
| 15 | ff000000 | 00000000 | 00000000 | 00fe0000 | ff0000fe | 00000000 | 00000000 | 00000000 |
| 16 | ffff00ff | 00000000 | 00000000 | 00000000 | ff000000 | 00000000 | 00000000 | 00ff0000 |
| 17 | ffff00ff | 00000000 | 00000000 | 00800000 | ff000080 | 00000000 | 00000000 | 00ff0000 |
| 18 | ffff00ff | 00000000 | 00000000 | 00c00000 | ff0000c0 | 00000000 | 00000000 | 00ff0000 |
| 19 | ffff00ff | 00000000 | 00000000 | 00e00000 | ff0000e0 | 00000000 | 00000000 | 00ff0000 |
| 20 | ffff00ff | 00000000 | 00000000 | 00f00000 | ff0000f0 | 00000000 | 00000000 | 00ff0000 |
| 21 | ffff00ff | 00000000 | 00000000 | 00f80000 | ff0000f8 | 00000000 | 00000000 | 00ff0000 |
| 22 | ffff00ff | 00000000 | 00000000 | 00fc0000 | ff0000fc | 00000000 | 00000000 | 00ff0000 |
| 23 | ffff00ff | 00000000 | 00000000 | 00fe0000 | ff0000fe | 00000000 | 00000000 | 00ff0000 |
| 24 | ff00ffff | 00000000 | 00000000 | 00000000 | ff000000 | 00000000 | 0000ff00 | 00ff0000 |
| 25 | ff00ffff | 00000000 | 00000000 | 00800000 | ff000080 | 00000000 | 0000ff00 | 00ff0000 |
| 26 | ff00ffff | 00000000 | 00000000 | 00c00000 | ff0000c0 | 00000000 | 0000ff00 | 00ff0000 |
| 27 | ff00ffff | 00000000 | 00000000 | 00e00000 | ff0000e0 | 00000000 | 0000ff00 | 00ff0000 |
| 28 | ff00ffff | 00000000 | 00000000 | 00f00000 | ff0000f0 | 00000000 | 0000ff00 | 00ff0000 |
| 29 | ff00ffff | 00000000 | 00000000 | 00f80000 | ff0000f8 | 00000000 | 0000ff00 | 00ff0000 |
| 30 | ff00ffff | 00000000 | 00000000 | 00fc0000 | ff0000fc | 00000000 | 0000ff00 | 00ff0000 |
| 31 | ff00ffff | 00000000 | 00000000 | 00fe0000 | ff0000fe | 00000000 | 0000ff00 | 00ff0000 |
| 32 | ffffffff | 00000000 | 00000000 | 00000000 | ff000000 | 000000ff | 0000ff00 | 00ff0000 |
| 33 | ffffffff | 00000000 | 00000000 | 00800000 | ff000080 | 000000ff | 0000ff00 | 00ff0000 |
| 34 | ffffffff | 00000000 | 00000000 | 00c00000 | ff0000c0 | 000000ff | 0000ff00 | 00ff0000 |
| 35 | ffffffff | 00000000 | 00000000 | 00e00000 | ff0000e0 | 000000ff | 0000ff00 | 00ff0000 |
| 36 | ffffffff | 00000000 | 00000000 | 00f00000 | ff0000f0 | 000000ff | 0000ff00 | 00ff0000 |
| 37 | ffffffff | 00000000 | 00000000 | 00f80000 | ff0000f8 | 000000ff | 0000ff00 | 00ff0000 |
| 38 | ffffffff | 00000000 | 00000000 | 00fc0000 | ff0000fc | 000000ff | 0000ff00 | 00ff0000 |
| 39 | ffffffff | 00000000 | 00000000 | 00fe0000 | ff0000fe | 000000ff | 0000ff00 | 00ff0000 |
| 40 | ffffffff | ff000000 | 00000000 | 00000000 | ff000000 | ff0000ff | 0000ff00 | 00ff0000 |
| 41 | ffffffff | ff000000 | 00000000 | 00800000 | ff000080 | ff0000ff | 0000ff00 | 00ff0000 |
| 42 | ffffffff | ff000000 | 00000000 | 00c00000 | ff0000c0 | ff0000ff | 0000ff00 | 00ff0000 |

FIG. 28A

| Nb | EncOddMask(Nb) | | | | EncEvenMask(Nb) | | | |
|---|---|---|---|---|---|---|---|---|
| 43 | ffffffff | ff000000 | 00000000 | 00e00000 | ff0000e0 | ff0000ff | 0000ff00 | 00ff0000 |
| 44 | ffffffff | ff000000 | 00000000 | 00f00000 | ff0000f0 | ff0000ff | 0000ff00 | 00ff0000 |
| 45 | ffffffff | ff000000 | 00000000 | 00f80000 | ff0000f8 | ff0000ff | 0000ff00 | 00ff0000 |
| 46 | ffffffff | ff000000 | 00000000 | 00fc0000 | ff0000fc | ff0000ff | 0000ff00 | 00ff0000 |
| 47 | ffffffff | ff000000 | 00000000 | 00fe0000 | ff0000fe | ff0000ff | 0000ff00 | 00ff0000 |
| 48 | ffffffff | ff0000ff | 00000000 | 00000000 | ffff0000 | ff0000ff | 0000ff00 | 00ff0000 |
| 49 | ffffffff | ff0000ff | 00000000 | 00800000 | ffff0040 | ff0000ff | 0000ff00 | 00ff0000 |
| 50 | ffffffff | ff0000ff | 00000000 | 00c00000 | ffff0060 | ff0000ff | 0000ff00 | 00ff0000 |
| 51 | ffffffff | ff0000ff | 00000000 | 00e00000 | ffff0070 | ff0000ff | 0000ff00 | 00ff0000 |
| 52 | ffffffff | ff0000ff | 00000000 | 00f00000 | ffff0078 | ff0000ff | 0000ff00 | 00ff0000 |
| 53 | ffffffff | ff0000ff | 00000000 | 00f80000 | ffff007c | ff0000ff | 0000ff00 | 00ff0000 |
| 54 | ffffffff | ff0000ff | 00000000 | 00fc0000 | ffff007e | ff0000ff | 0000ff00 | 00ff0000 |
| 55 | ffffffff | ff0000ff | 00000000 | 00fe0000 | ffff007f | ff0000ff | 0000ff00 | 00ff0000 |
| 56 | ffffffff | ff00ffff | 00000000 | 00000000 | ffff0000 | ff0000ff | 0000ff00 | 00ffff00 |
| 57 | ffffffff | ff00ffff | 00000000 | 00800000 | ffff0040 | ff0000ff | 0000ff00 | 00ffff00 |
| 58 | ffffffff | ff00ffff | 00000000 | 00c00000 | ffff0060 | ff0000ff | 0000ff00 | 00ffff00 |
| 59 | ffffffff | ff00ffff | 00000000 | 00e00000 | ffff0070 | ff0000ff | 0000ff00 | 00ffff00 |
| 60 | ffffffff | ff00ffff | 00000000 | 00f00000 | ffff0078 | ff0000ff | 0000ff00 | 00ffff00 |
| 61 | ffffffff | ff00ffff | 00000000 | 00f80000 | ffff007c | ff0000ff | 0000ff00 | 00ffff00 |
| 62 | ffffffff | ff00ffff | 00000000 | 00fc0000 | ffff007e | ff0000ff | 0000ff00 | 00ffff00 |
| 63 | ffffffff | ff00ffff | 00000000 | 00fe0000 | ffff007f | ff0000ff | 0000ff00 | 00ffff00 |
| 64 | ffffffff | ffffffff | 00000000 | 00000000 | ffff0000 | ff0000ff | 0000ffff | 00ffff00 |
| 65 | ffffffff | ffffffff | 00000000 | 00800000 | ffff0040 | ff0000ff | 0000ffff | 00ffff00 |
| 66 | ffffffff | ffffffff | 00000000 | 00c00000 | ffff0060 | ff0000ff | 0000ffff | 00ffff00 |
| 67 | ffffffff | ffffffff | 00000000 | 00e00000 | ffff0070 | ff0000ff | 0000ffff | 00ffff00 |
| 68 | ffffffff | ffffffff | 00000000 | 00f00000 | ffff0078 | ff0000ff | 0000ffff | 00ffff00 |
| 69 | ffffffff | ffffffff | 00000000 | 00f80000 | ffff007c | ff0000ff | 0000ffff | 00ffff00 |
| 70 | ffffffff | ffffffff | 00000000 | 00fc0000 | ffff007e | ff0000ff | 0000ffff | 00ffff00 |
| 71 | ffffffff | ffffffff | 00000000 | 00fe0000 | ffff007f | ff0000ff | 0000ffff | 00ffff00 |
| 72 | ffffffff | ffffffff | ff000000 | 00000000 | ffff0000 | ff0000ff | ff00ffff | 00ffff00 |
| 73 | ffffffff | ffffffff | ff000000 | 00800000 | ffff0040 | ff0000ff | ff00ffff | 00ffff00 |
| 74 | ffffffff | ffffffff | ff000000 | 00c00000 | ffff0060 | ff0000ff | ff00ffff | 00ffff00 |
| 75 | ffffffff | ffffffff | ff000000 | 00e00000 | ffff0070 | ff0000ff | ff00ffff | 00ffff00 |
| 76 | ffffffff | ffffffff | ff000000 | 00f00000 | ffff0078 | ff0000ff | ff00ffff | 00ffff00 |
| 77 | ffffffff | ffffffff | ff000000 | 00f80000 | ffff007c | ff0000ff | ff00ffff | 00ffff00 |

FIG. 28B

| Nb | EncOddMask(Nb) | | | | EncEvenMask(Nb) | | | |
|---|---|---|---|---|---|---|---|---|
| 78 | ffffffff | ffffffff | ff000000 | 00fc0000 | ffff007e | ff0000ff | ff00ffff | 00ffff00 |
| 79 | ffffffff | ffffffff | ff000000 | 00fe0000 | ffff007f | ff0000ff | ff00ffff | 00ffff00 |
| 80 | ffffffff | ffffffff | ff0000ff | 00000000 | ffff0000 | ffff00ff | ff00ffff | 00ffff00 |
| 81 | ffffffff | ffffffff | ff0000ff | 00800000 | ffff0040 | ffff00ff | ff00ffff | 00ffff00 |
| 82 | ffffffff | ffffffff | ff0000ff | 00c00000 | ffff0060 | ffff00ff | ff00ffff | 00ffff00 |
| 83 | ffffffff | ffffffff | ff0000ff | 00e00000 | ffff0070 | ffff00ff | ff00ffff | 00ffff00 |
| 84 | ffffffff | ffffffff | ff0000ff | 00f00000 | ffff0078 | ffff00ff | ff00ffff | 00ffff00 |
| 85 | ffffffff | ffffffff | ff0000ff | 00f80000 | ffff007c | ffff00ff | ff00ffff | 00ffff00 |
| 86 | ffffffff | ffffffff | ff0000ff | 00fc0000 | ffff007e | ffff00ff | ff00ffff | 00ffff00 |
| 87 | ffffffff | ffffffff | ff0000ff | 00fe0000 | ffff007f | ffff00ff | ff00ffff | 00ffff00 |
| 88 | ffffffff | ffffffff | ffff00ff | 00000000 | ffffff00 | ffff00ff | ff00ffff | 00ffff00 |
| 89 | ffffffff | ffffffff | ffff00ff | 00800000 | ffffff04 | ffff00ff | ff00ffff | 00ffff00 |
| 90 | ffffffff | ffffffff | ff00ffff | 00c00000 | ffffff06 | ffff00ff | ff00ffff | 00ffff00 |
| 91 | ffffffff | ffffffff | ff00ffff | 00e00000 | ffffff07 | ffff00ff | ff00ffff | 00ffff00 |
| 92 | ffffffff | ffffffff | ff00ffff | 00f00000 | ffffff87 | ffff00ff | ff00ffff | 00ffff00 |
| 93 | ffffffff | ffffffff | ff00ffff | 00f80000 | ffffffc7 | ffff00ff | ff00ffff | 00ffff00 |
| 94 | ffffffff | ffffffff | ff00ffff | 00fc0000 | ffffffe7 | ffff00ff | ff00ffff | 00ffff00 |
| 95 | ffffffff | ffffffff | ff00ffff | 00fe0000 | fffffff7 | ffff00ff | ff00ffff | 00ffff00 |
| 96 | ffffffff | ffffffff | ffffffff | 00000000 | ffffff00 | ffff00ff | ff00ffff | ffffff00 |
| 97 | ffffffff | ffffffff | ffffffff | 00800000 | ffffff04 | ffff00ff | ff00ffff | ffffff00 |
| 98 | ffffffff | ffffffff | ffffffff | 00c00000 | ffffff06 | ffff00ff | ff00ffff | ffffff00 |
| 99 | ffffffff | ffffffff | ffffffff | 00e00000 | ffffff07 | ffff00ff | ff00ffff | ffffff00 |
| 100 | ffffffff | ffffffff | ffffffff | 00f00000 | ffffff87 | ffff00ff | ff00ffff | ffffff00 |
| 101 | ffffffff | ffffffff | ffffffff | 00f80000 | ffffffc7 | ffff00ff | ff00ffff | ffffff00 |
| 102 | ffffffff | ffffffff | ffffffff | 00fc0000 | ffffffe7 | ffff00ff | ff00ffff | ffffff00 |
| 103 | ffffffff | ffffffff | ffffffff | 00fe0000 | fffffff7 | ffff00ff | ff00ffff | ffffff00 |
| 104 | ffffffff | ffffffff | ffffffff | ff000000 | ffffff00 | ffff00ff | ff00ffff | ffffffff |
| 105 | ffffffff | ffffffff | ffffffff | ff400000 | ffffff04 | ffff00ff | ff00ffff | ffffffff |
| 106 | ffffffff | ffffffff | ffffffff | ff600000 | ffffff06 | ffff00ff | ff00ffff | ffffffff |
| 107 | ffffffff | ffffffff | ffffffff | ff700000 | ffffff07 | ffff00ff | ff00ffff | ffffffff |
| 108 | ffffffff | ffffffff | ffffffff | ff780000 | ffffff87 | ffff00ff | ff00ffff | ffffffff |
| 109 | ffffffff | ffffffff | ffffffff | ff7c0000 | ffffffc7 | ffff00ff | ff00ffff | ffffffff |
| 110 | ffffffff | ffffffff | ffffffff | ff7e0000 | ffffffe7 | ffff00ff | ff00ffff | ffffffff |
| 111 | ffffffff | ffffffff | ffffffff | fffe0000 | fffffff7 | ffff00ff | ff00ffff | ffffffff |
| 112 | ffffffff | ffffffff | ffffffff | ff0000ff | ffffff00 | ffff00ff | ffffffff | ffffffff |

FIG. 28C

| Nb | EncOddMask(Nb) | | | | EncEvenMask(Nb) | | | |
|---|---|---|---|---|---|---|---|---|
| 113 | ffffffff | ffffffff | ffffffff | ff1000ff | ffffff04 | ffff00ff | ffffffff | ffffffff |
| 114 | ffffffff | ffffffff | ffffffff | ff1800ff | ffffff06 | ffff00ff | ffffffff | ffffffff |
| 115 | ffffffff | ffffffff | ffffffff | ff1c00ff | ffffff07 | ffff00ff | ffffffff | ffffffff |
| 116 | ffffffff | ffffffff | ffffffff | ff1e00ff | ffffff87 | ffff00ff | ffffffff | ffffffff |
| 117 | ffffffff | ffffffff | ffffffff | ff1f00ff | ffffffc7 | ffff00ff | ffffffff | ffffffff |
| 118 | ffffffff | ffffffff | ffffffff | ff9f00ff | ffffffe7 | ffff00ff | ffffffff | ffffffff |
| 119 | ffffffff | ffffffff | ffffffff | ffdf00ff | fffffff7 | ffff00ff | ffffffff | ffffffff |
| 120 | ffffffff | ffffffff | ffffffff | ff00ffff | ffffff00 | ffffffff | ffffffff | ffffffff |
| 121 | ffffffff | ffffffff | ffffffff | ff04ffff | ffffff04 | ffffffff | ffffffff | ffffffff |
| 122 | ffffffff | ffffffff | ffffffff | ff06ffff | ffffff06 | ffffffff | ffffffff | ffffffff |
| 123 | ffffffff | ffffffff | ffffffff | ff07ffff | ffffff07 | ffffffff | ffffffff | ffffffff |
| 124 | ffffffff | ffffffff | ffffffff | ff87ffff | ffffff87 | ffffffff | ffffffff | ffffffff |
| 125 | ffffffff | ffffffff | ffffffff | ffc7ffff | ffffffc7 | ffffffff | ffffffff | ffffffff |
| 126 | ffffffff | ffffffff | ffffffff | ffe7ffff | ffffffe7 | ffffffff | ffffffff | ffffffff |
| 127 | ffffffff | ffffffff | ffffffff | fff7ffff | fffffff7 | ffffffff | ffffffff | ffffffff |
| 128 | ffffffff | ffffffff | ffffffff | ffffffff | ffffffff | ffffffff | ffffffff | ffffffff |

FIG. 28D

| Nb | OddConst(Nb) | | | | EvenConst(Nb) | | | |
|----|----------|----------|----------|----------|----------|----------|----------|----------|
| 8 | 00fbfbfb | fbfbfbfb | fbfbfbfb | fbfbfbfb | 00fbfbfb | fbfbfbfb | fbfbfbfb | fbfbfbfb |
| 9 | 00fbfb63 | fbfbb4fb | fb63fbfb | fbfbfbfb | 00fbfbfb | fbfbfbcd | fbfbc8fb | fb31fbfb |
| 10 | 00fbfb23 | fbfb5dfb | fb7cfbfb | fbfbfbfb | 00fbfbfb | fbfbfbba | fbfb61fb | fb18fbfb |
| 11 | 00fbfb03 | fbfbaffb | fb7bfbfb | fbfbfbfb | 00fbfbfb | fbfbfbd0 | fbfb50fb | fb0cfbfb |
| 12 | 00fbfb03 | fbfb05fb | fb6ffbfb | fbfbfbfb | 00fbfbfb | fbfbfb04 | fbfb05fb | fb06fbfb |
| 13 | 00fbfb03 | fbfb50fb | fbfefbfb | fbfbfbfb | 00fbfbfb | fbfbfbad | fbfbaffb | fb03fbfb |
| 14 | 00fbfb03 | fbfb61fb | fbadfbfb | fbfbfbfb | 00fbfbfb | fbfbfb64 | fbfb5dfb | fb01fbfb |
| 15 | 00fbfb01 | fbfbc8fb | fbc7fbfb | fbfbfbfb | 00fbfbfb | fbfbfbb4 | fbfbb4fb | fb00fbfb |
| 16 | 00fbfbfb | fbfbfbfb | fbfbfbfb | fb00fbfb | 00fbfb00 | fbfbfbad | fbfbfbfb | fbfbfbfb |
| 17 | 00fbfb63 | fbfbb4fb | fb63fbfb | fb00fbfb | 00fbfb00 | fbfbfbcd | fbfbc8fb | fb31fbfb |
| 18 | 00fbfb23 | fbfb5dfb | fb7cfbfb | fb00fbfb | 00fbfb00 | fbfbfbba | fbfb61fb | fb18fbfb |
| 19 | 00fbfb03 | fbfbaffb | fb7bfbfb | fb00fbfb | 00fbfb00 | fbfbfbd0 | fbfb50fb | fb0cfbfb |
| 20 | 00fbfb03 | fbfb05fb | fb6ffbfb | fb00fbfb | 00fbfb00 | fbfbfb04 | fbfb05fb | fb06fbfb |
| 21 | 00fbfb03 | fbfb50fb | fbfefbfb | fb00fbfb | 00fbfb00 | fbfbfbad | fbfbaffb | fb03fbfb |
| 22 | 00fbfb03 | fbfb61fb | fbadfbfb | fb00fbfb | 00fbfb00 | fbfbfb64 | fbfb5dfb | fb01fbfb |
| 23 | 00fbfb01 | fbfbc8fb | fbc7fbfb | fb00fbfb | 00fbfb00 | fbfbfbb4 | fbfbb4fb | fb00fbfb |
| 24 | 00fbfbfb | fbfbfbfb | fbfb00fb | fb00fbfb | 00fb0000 | fbfbfbad | fbfbfbfb | fbfbfbfb |
| 25 | 00fbfb63 | fbfbb4fb | fb6300fb | fb00fbfb | 00fb0000 | fbfbfbcd | fbfbc8fb | fb31fbfb |
| 26 | 00fbfb23 | fbfb5dfb | fb7c00fb | fb00fbfb | 00fb0000 | fbfbfbba | fbfb61fb | fb18fbfb |
| 27 | 00fbfb03 | fbfbaffb | fb7b00fb | fb00fbfb | 00fb0000 | fbfbfbd0 | fbfb50fb | fb0cfbfb |
| 28 | 00fbfb03 | fbfb05fb | fb6f00fb | fb00fbfb | 00fb0000 | fbfbfb04 | fbfb05fb | fb06fbfb |
| 29 | 00fbfb03 | fbfb50fb | fbfe00fb | fb00fbfb | 00fb0000 | fbfbfbad | fbfbaffb | fb03fbfb |
| 30 | 00fbfb03 | fbfb61fb | fbad00fb | fb00fbfb | 00fb0000 | fbfbfb64 | fbfb5dfb | fb01fbfb |
| 31 | 00fbfb01 | fbfbc8fb | fbc700fb | fb00fbfb | 00fb0000 | fbfbfbb4 | fbfbb4fb | fb00fbfb |
| 32 | 00fbfbfb | fbfbfb00 | fbfb00fb | fb00fbfb | 00000000 | fbfbfbad | fbfbfbfb | fbfbfbfb |
| 33 | 00fbfb63 | fbfbb400 | fb6300fb | fb00fbfb | 00000000 | fbfbfbcd | fbfbc8fb | fb31fbfb |
| 34 | 00fbfb23 | fbfb5d00 | fb7c00fb | fb00fbfb | 00000000 | fbfbfbba | fbfb61fb | fb18fbfb |
| 35 | 00fbfb03 | fbfbaf00 | fb7b00fb | fb00fbfb | 00000000 | fbfbfbd0 | fbfb50fb | fb0cfbfb |
| 36 | 00fbfb03 | fbfb0500 | fb6f00fb | fb00fbfb | 00000000 | fbfbfb04 | fbfb05fb | fb06fbfb |
| 37 | 00fbfb03 | fbfb5000 | fbfe00fb | fb00fbfb | 00000000 | fbfbfbad | fbfbaffb | fb03fbfb |
| 38 | 00fbfb03 | fbfb6100 | fbad00fb | fb00fbfb | 00000000 | fbfbfb64 | fbfb5dfb | fb01fbfb |
| 39 | 00fbfb01 | fbfbc800 | fbc700fb | fb00fbfb | 00000000 | fbfbfbb4 | fbfbb4fb | fb00fbfb |
| 40 | 00fbfbfb | 00fbfb00 | fbfb00fb | fb00fbfb | 00000000 | fbfbfbad | fbfbfbfb | fbfbfbfb |
| 41 | 00fbfb63 | 00fbb400 | fb6300fb | fb00fbfb | 00000000 | fbfbfbcd | fbfbc8fb | fb31fbfb |
| 42 | 00fbfb23 | 00fb5d00 | fb7c00fb | fb00fbfb | 00000000 | fbfbfbba | fbfb61fb | fb18fbfb |

## FIG. 29A

| Nb | OddConst(Nb) | | | | EvenConst(Nb) | | | |
|----|----------|----------|----------|----------|----------|----------|----------|----------|
| 43 | 00fbfb03 | 00fbaf00 | fb7b00fb | fb00fbfb | 00000000 | fbfbfbd0 | fbfb50fb | fb0cfbfb |
| 44 | 00fbfb03 | 00fb0500 | fb6f00fb | fb00fbfb | 00000000 | fbfbfb04 | fbfb05fb | fb06fbfb |
| 45 | 00fbfb03 | 00fb5000 | fbfe00fb | fb00fbfb | 00000000 | fbfbfbad | fbfbaffb | fb03fbfb |
| 46 | 00fbfb03 | 00fb6100 | fbad00fb | fb00fbfb | 00000000 | fbfbfb64 | fbfb5dfb | fb01fbfb |
| 47 | 00fbfb01 | 00fbc800 | fbc700fb | fb00fbfb | 00000000 | fbfbfbb4 | fbfbb4fb | fb00fbfb |
| 48 | 0000fbfb | 00fbfb00 | fbfb00fb | fb00fbfb | 00000000 | 00fbfb00 | fbfbfbfb | fbfbfbfb |
| 49 | 0000fbb1 | 00fbb400 | fb6300fb | fb00fbfb | 00000000 | 00fbfb00 | fbfbcdfb | fb31fbfb |
| 50 | 0000fb91 | 00fb5d00 | fb7c00fb | fb00fbfb | 00000000 | 00fbfb00 | fbfbbafb | fb18fbfb |
| 51 | 0000fb81 | 00fbaf00 | fb7b00fb | fb00fbfb | 00000000 | 00fbfb00 | fbfbd0fb | fb0cfbfb |
| 52 | 0000fb81 | 00fb0500 | fb6f00fb | fb00fbfb | 00000000 | 00fbfb00 | fbfb04fb | fb06fbfb |
| 53 | 0000fb81 | 00fb5000 | fbfe00fb | fb00fbfb | 00000000 | 00fbfb00 | fbfbadfb | fb03fbfb |
| 54 | 0000fb81 | 00fb6100 | fbad00fb | fb00fbfb | 00000000 | 00fbfb00 | fbfb64fb | fb01fbfb |
| 55 | 0000fb80 | 00fbc800 | fbc700fb | fb00fbfb | 00000000 | 00fbfb00 | fbfbb4fb | fb00fbfb |
| 56 | 0000fbfb | 00fbfb00 | fbfb00fb | fb000fb | 00000000 | 00fb0000 | fbfbfbfb | fbfbfbfb |
| 57 | 0000fbb1 | 00fbb400 | fb6300fb | fb000fb | 00000000 | 00fb0000 | fbfbcdfb | fb31fbfb |
| 58 | 0000fb91 | 00fb5d00 | fb7c00fb | fb000fb | 00000000 | 00fb0000 | fbfbbafb | fb18fbfb |
| 59 | 0000fb81 | 00fbaf00 | fb7b00fb | fb000fb | 00000000 | 00fb0000 | fbfbd0fb | fb0cfbfb |
| 60 | 0000fb81 | 00fb0500 | fb6f00fb | fb000fb | 00000000 | 00fb0000 | fbfb04fb | fb06fbfb |
| 61 | 0000fb81 | 00fb5000 | fbfe00fb | fb000fb | 00000000 | 00fb0000 | fbfbadfb | fb03fbfb |
| 62 | 0000fb81 | 00fb6100 | fbad00fb | fb000fb | 00000000 | 00fb0000 | fbfb64fb | fb01fbfb |
| 63 | 0000fb80 | 00fbc800 | fbc700fb | fb000fb | 00000000 | 00fb0000 | fbfbb4fb | fb00fbfb |
| 64 | 0000fbfb | 00fbfb00 | fbfb0000 | fb000fb | 00000000 | 00000000 | fbfbfbfb | fbfbfbfb |
| 65 | 0000fbb1 | 00fbb400 | fb630000 | fb000fb | 00000000 | 00000000 | fbfbcdfb | fb31fbfb |
| 66 | 0000fb91 | 00fb5d00 | fb7c0000 | fb000fb | 00000000 | 00000000 | fbfbbafb | fb18fbfb |
| 67 | 0000fb81 | 00fbaf00 | fb7b0000 | fb000fb | 00000000 | 00000000 | fbfbd0fb | fb0cfbfb |
| 68 | 0000fb81 | 00fb0500 | fb6f0000 | fb000fb | 00000000 | 00000000 | fbfb04fb | fb06fbfb |
| 69 | 0000fb81 | 00fb5000 | fbfe0000 | fb000fb | 00000000 | 00000000 | fbfbadfb | fb03fbfb |
| 70 | 0000fb81 | 00fb6100 | fbad0000 | fb000fb | 00000000 | 00000000 | fbfb64fb | fb01fbfb |
| 71 | 0000fb80 | 00fbc800 | fbc70000 | fb000fb | 00000000 | 00000000 | fbfbb4fb | fb00fbfb |
| 72 | 0000fbfb | 00fbfb00 | 00fb0000 | fb000fb | 00000000 | 00000000 | fbfbfbfb | fbfbfbfb |
| 73 | 0000fbb1 | 00fbb400 | 00630000 | fb000fb | 00000000 | 00000000 | fbfbcdfb | fb31fbfb |
| 74 | 0000fb91 | 00fb5d00 | 007c0000 | fb000fb | 00000000 | 00000000 | fbfbbafb | fb18fbfb |
| 75 | 0000fb81 | 00fbaf00 | 007b0000 | fb000fb | 00000000 | 00000000 | fbfbd0fb | fb0cfbfb |
| 76 | 0000fb81 | 00fb0500 | 006f0000 | fb000fb | 00000000 | 00000000 | fbfb04fb | fb06fbfb |
| 77 | 0000fb81 | 00fb5000 | 00fe0000 | fb000fb | 00000000 | 00000000 | fbfbadfb | fb03fbfb |

FIG. 29B

| Nb | OddConst(Nb) | | | | EvenConst(Nb) | | | |
|---|---|---|---|---|---|---|---|---|
| 78 | 0000fb81 | 00fb6100 | 00ad0000 | fb00000 | 00000000 | 00000000 | fbfb64fb | fb01fbfb |
| 79 | 0000fb80 | 00fbc800 | 00c70000 | fb00000 | 00000000 | 00000000 | fbfbb4fb | fb00fbfb |
| 80 | 0000fbfb | 0000fb00 | 00fb0000 | fb00000 | 00000000 | 00000000 | fbfbfbfb | fbfbfbfb |
| 81 | 0000fbb1 | 0000b400 | 00630000 | fb00000 | 00000000 | 00000000 | fbfbcdfb | fb31fbfb |
| 82 | 0000fb91 | 00005d00 | 007c0000 | fb00000 | 00000000 | 00000000 | fbfbbafb | fb18fbfb |
| 83 | 0000fb81 | 0000af00 | 007b0000 | fb00000 | 00000000 | 00000000 | fbfbd0fb | fb0cfbfb |
| 84 | 0000fb81 | 00000500 | 006f0000 | fb00000 | 00000000 | 00000000 | fbfb04fb | fb06fbfb |
| 85 | 0000fb81 | 00005000 | 00fe0000 | fb00000 | 00000000 | 00000000 | fbfbadfb | fb03fbfb |
| 86 | 0000fb81 | 00006100 | 00ad0000 | fb00000 | 00000000 | 00000000 | fbfb64fb | fb01fbfb |
| 87 | 0000fb80 | 0000c800 | 00c70000 | fb00000 | 00000000 | 00000000 | fbfbb4fb | fb00fbfb |
| 88 | 000000fb | 0000fb00 | 00fb0000 | fb00000 | 00000000 | 00000000 | 00fb0000 | fbfbfbfb |
| 89 | 0000001b | 0000b400 | 00630000 | fb00000 | 00000000 | 00000000 | 00fb0000 | fb00fbfb |
| 90 | 00000019 | 00005d00 | 007c0000 | fb00000 | 00000000 | 00000000 | 00fb0000 | fb00fbfb |
| 91 | 00000018 | 0000af00 | 007b0000 | fb00000 | 00000000 | 00000000 | 00fb0000 | fb00fbfb |
| 92 | 00000018 | 00000500 | 006f0000 | fb00000 | 00000000 | 00000000 | 00fb0000 | fb00fbfb |
| 93 | 00000018 | 00005000 | 00fe0000 | fb00000 | 00000000 | 00000000 | 00fb0000 | fb00fbfb |
| 94 | 00000018 | 00006100 | 00ad0000 | fb00000 | 00000000 | 00000000 | 00fb0000 | fb00fbfb |
| 95 | 00000008 | 0000c800 | 00c70000 | fb00000 | 00000000 | 00000000 | 00fb0000 | fb00fbfb |
| 96 | 000000fb | 0000fb00 | 00fb0000 | fb00000 | 00000000 | 00000000 | 00000000 | fb00fbfb |
| 97 | 0000001b | 0000b400 | 00630000 | fb00000 | 00000000 | 00000000 | 00000000 | fb00fbfb |
| 98 | 00000019 | 00005d00 | 007c0000 | fb00000 | 00000000 | 00000000 | 00000000 | fb00fbfb |
| 99 | 00000018 | 0000af00 | 007b0000 | fb00000 | 00000000 | 00000000 | 00000000 | fb00fbfb |
| 100 | 00000018 | 00000500 | 006f0000 | fb00000 | 00000000 | 00000000 | 00000000 | fb00fbfb |
| 101 | 00000018 | 00005000 | 00fe0000 | fb00000 | 00000000 | 00000000 | 00000000 | fb00fbfb |
| 102 | 00000018 | 00006100 | 00ad0000 | fb00000 | 00000000 | 00000000 | 00000000 | fb00fbfb |
| 103 | 00000008 | 0000c800 | 00c70000 | fb00000 | 00000000 | 00000000 | 00000000 | fb00fbfb |
| 104 | 000000fb | 0000fb00 | 00fb0000 | 00000000 | 00000000 | 00000000 | 00000000 | 00fbfbfb |
| 105 | 0000001b | 0000b400 | 00630000 | 00000000 | 00000000 | 00000000 | 00000000 | 0000fbfb |
| 106 | 00000019 | 00005d00 | 007c0000 | 00000000 | 00000000 | 00000000 | 00000000 | 0000fbfb |
| 107 | 00000018 | 0000af00 | 007b0000 | 00000000 | 00000000 | 00000000 | 00000000 | 0000fbfb |
| 108 | 00000018 | 00000500 | 006f0000 | 00000000 | 00000000 | 00000000 | 00000000 | 0000fbfb |
| 109 | 00000018 | 00005000 | 00fe0000 | 00000000 | 00000000 | 00000000 | 00000000 | 0000fbfb |
| 110 | 00000018 | 00006100 | 00ad0000 | 00000000 | 00000000 | 00000000 | 00000000 | 0000fbfb |
| 111 | 00000008 | 0000c800 | 00c70000 | 00000000 | 00000000 | 00000000 | 00000000 | 0000fbfb |
| 112 | 000000fb | 0000fb00 | 00000000 | 00000000 | 00000000 | 00000000 | 00000000 | 0000fbfb |

FIG. 29C

| Nb | OddConst(Nb) | | | | EvenConst(Nb) | | | |
|---|---|---|---|---|---|---|---|---|
| 113 | 0000001b | 00006300 | 00000000 | 00000000 | 00000000 | 00000000 | 00000000 | 0000fb00 |
| 114 | 00000019 | 00007c00 | 00000000 | 00000000 | 00000000 | 00000000 | 00000000 | 0000fb00 |
| 115 | 00000018 | 00007b00 | 00000000 | 00000000 | 00000000 | 00000000 | 00000000 | 0000fb00 |
| 116 | 00000018 | 00006f00 | 00000000 | 00000000 | 00000000 | 00000000 | 00000000 | 0000fb00 |
| 117 | 00000018 | 0000fe00 | 00000000 | 00000000 | 00000000 | 00000000 | 00000000 | 0000fb00 |
| 118 | 00000018 | 0000ad00 | 00000000 | 00000000 | 00000000 | 00000000 | 00000000 | 0000fb00 |
| 119 | 00000008 | 0000c700 | 00000000 | 00000000 | 00000000 | 00000000 | 00000000 | 0000fb00 |
| 120 | 000000fb | 00000000 | 00000000 | 00000000 | 00000000 | 00000000 | 00000000 | 00fb0000 |
| 121 | 00000000 | 00000000 | 00000000 | 00000000 | 00000000 | 00000000 | 00000000 | 00000000 |
| 122 | 00000000 | 00000000 | 00000000 | 00000000 | 00000000 | 00000000 | 00000000 | 00000000 |
| 123 | 00000000 | 00000000 | 00000000 | 00000000 | 00000000 | 00000000 | 00000000 | 00000000 |
| 124 | 00000000 | 00000000 | 00000000 | 00000000 | 00000000 | 00000000 | 00000000 | 00000000 |
| 125 | 00000000 | 00000000 | 00000000 | 00000000 | 00000000 | 00000000 | 00000000 | 00000000 |
| 126 | 00000000 | 00000000 | 00000000 | 00000000 | 00000000 | 00000000 | 00000000 | 00000000 |
| 127 | 00000000 | 00000000 | 00000000 | 00000000 | 00000000 | 00000000 | 00000000 | 00000000 |
| 128 | 00000000 | 00000000 | 00000000 | 00000000 | 00000000 | 00000000 | 00000000 | 00000000 |

## FIG. 29D

INPUT: 128-BIT INPUT $X_i$, 128-BIT ROUND KEY $dRK_i$, BLOCK LENGTH Nb
OUTPUT: 128-BIT OUTPUT $X_{i+1}$
 1: Y ← InvSubBytes($X_i$, Nb, 2)
 2: Y ← InvShifRows(Y)
 3: Y ← Y ⊕ $dRK_i$
 4: Y ← Y ^ DecEvenMask(Nb)
 5: Y ← Y ⊕ EvenConst(Nb)
 6: $X_{i+1}$ ← InvMixCoumns(Y, 2)

## FIG. 30

INPUT: 128-BIT INPUT $X_{Nr}$, 128-BIT ROUND KEY $dRK_{Nr}$, BLOCK LENGTH Nb
OUTPUT: 128-BIT PLAINTEXT P
1: Y ← InvSubBytes($X_{Nr}$, Nb, 2)
2: Y ← InvShifRows(Y)
3: Y ← Y ⊕ $dRK_{Nr}$
4: P ← SetPosOut(Y, Nb, 2)

## FIG. 31

300

| TWEAK |
| MASTER KEY | MESSAGE AUTHENTICATION VALUE GENERATION UNIT | 310
| SECRET KEY |

## FIG. 32

START

GENERATE SECRET KEY USING MASTER KEY AND TWEAK ～410

GENERATE ENCRYPTION ROUND KEYS($eRK_0$, $eRK_1$,..., $eRK_{Nr}$)USING SECRET KEY AND NUMBER OF ROUNDS(Nr) ～420

OUTPUT CIPHERTEXT USING PLAINTEXT AND ENCRYPTION ROUND KEYS ～430

END

FIG. 33

START

GENERATE SECRET KEY USING
MASTER KEY AND TWEAK — 510

GENERATE DECRYPTION ROUND
KEYS($dRK_0$, $dRK_1$,..., $dRK_{Nr}$)USING
SECRET KEY AND NUMBER
OF ROUNDS(Nr) — 520

RESTORE CIPHERTEXT INTO
PLAINTEXT USING CIPHERTEXT
AND DECRYPTION ROUND KEYS — 530

END

FIG. 34

**EP 2 911 138 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050069927